# EUROPEAN PATENT APPLICATION

(11) **EP 1 439 668 A2**
(43) Date of publication of application: **21.07.2004**
(21) Application number: 04001089.4
(22) Date of filing: 20.01.2004
(51) Int. Cl.: H04L 12/28

(54) **System and method for supporting multimedia broadcast/multicast service in a non-tracking area**

(30) Priority: 20.01.2003 KR 2003003804; 21.01.2003 KR 2003004137
(71) Applicant: Samsung Electronics Co., Ltd., Suwon-si, Gyeonggi-do (KR)
(72) Inventor: Hwang, Sung-Oh, c/o Samsung Electronics Co.,Ltd., Suwon-si, Gyeonggi-do (KR); Lee, Kook-Heul, c/o Samsung Electronics Co.,Ltd., Suwon-si, Gyeonggi-do (KR); Choi, Sung-Ho, c/o Samsung Electronics Co.,Ltd., Suwon-si, Gyeonggi-do (KR)
(74) Representative: Grünecker, Kinkeldey, Stockmair & Schwanhäusser Anwaltssozietät

(57) **Abstract**

A mobile communication system including an SRNC, a TRNC, and an SGSN. The UE notifies cell movement to the TRNC, and receives, from the TRNC, whether a packet service available in a first cell is available in a second cell, and radio resource information for receiving the packet service in the second cell, and receives the packet service from the second cell. The TRNC requests an authentication for the UE from the SGSN, and receives, from the SGSN, information on whether the UE can receive the packet service, and packet service information for the packet service the UE is receiving in the first cell, if the UE can, and transmits, to the UE, whether the packet service is available, and radio resource information for providing the packet service. The SGSN transmits, to the TRNC, information on whether the UE can the packet service, and packet service information.

## Description

### BACKGROUND OF THE INVENTION

### 1. Field of the Invention

The present invention relates generally to a mobile communication system, and in particular, to a system and method for supporting a multimedia broadcast/multicast service in a non-tracking area.

### 2. Description of the Related Art

Currently, due to the development of the communication industry, a service provided in a code division multiple access (CDMA) mobile communication system is developing into multicasting multimedia communication that transmits voice data and mass data, such as packet data and circuit data. In order to support multicasting multimedia communication, a broadcast/multicast service in which a particular service is provided from one data source to a plurality of user equipments (UEs) has been proposed. The broadcast/multicast service can be classified into a cell broadcast service (CBS), which is a message-oriented service, and a multimedia broadcast/multicast service (MBMS) that supports multimedia data such as real-time image and voice, still image, and text.

The MBMS service is supported through a broadcast channel (BCH), considering the possibility that a plurality of services will be simultaneously provided in one cell. In addition, a transmission scheme supporting the MBMS service is classified into a point-to-point (PTP) transmission scheme and a point-to-multipoint (PTM) transmission scheme. The PTP scheme refers to a transmission scheme in which individual MBMS data is separately serviced to a plurality of UEs, and the PTM scheme refers to a transmission scheme in which the same MBMS data is commonly serviced to a plurality of UEs.

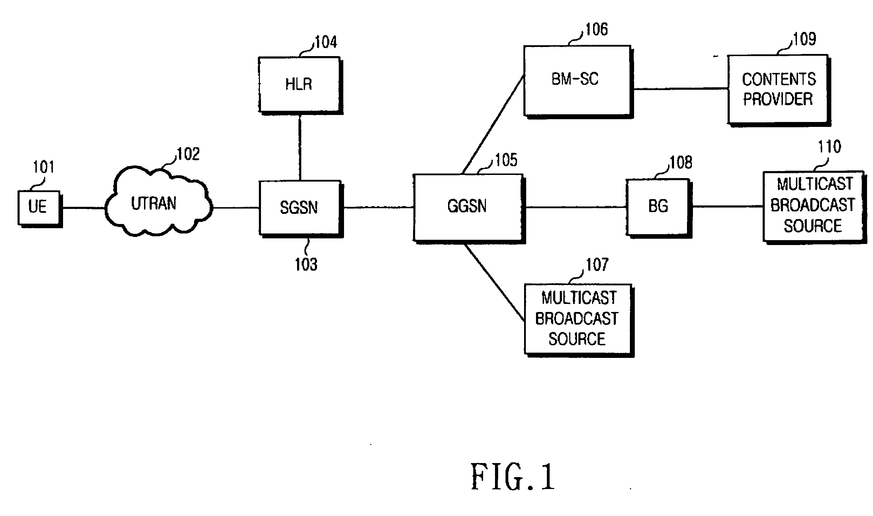

FIG. 1 is a block diagram schematically illustrating a network configuration for supporting an MBMS service in a mobile communication system. Referring to FIG. 1, a network supporting the MBMS service includes a UE 101 receiving an MBMS service, a UMTS (Universal Mobile Telecommunications System) radio access network (UTRAN) 102, a serving GPRS (General Packet Radio Service) support node (SGSN) 103 belonging to a core network (CN), a home location register (HLR) 104, a gateway GPRS support node (GGSN) 105, a broadcast/multicast service center (BM-SC) 106, a border gateway (BG) 108, a multicast broadcast source 107, a contents provide 109, and a multicast broadcast source 110.

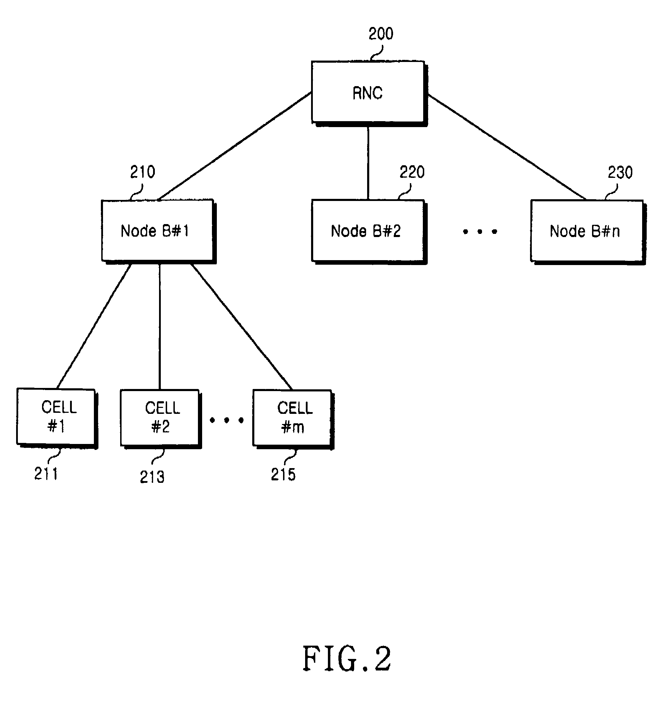

The UE 101, which is connected to the UTRAN 102, processes a call, supports both a circuit service (CC) and a packet service (PS), and has hardware and software for receiving MBMS data. The UTRAN 102 is comprised of a Node B (not shown) and a radio network controller (RNC; not shown). The Node B is connected to the UE 101 via a Uu interface, while the UTRAN 102 is connected to the SGSN 103 via an Iu interface. A structure of the UTRAN 102 will be described later with reference to FIG. 2. The UTRAN 102 performs protocol conversion in order to deliver radio data or control messages transmitted over the air by the UE 101 to the CN that uses a GPRS tunneling protocol (GTP). Here, "GPRS" refers to a packet data service performed in the UMTS network. The SGSN 103 is a network node that manages subscriber information and location information of the UE 101. The SGSN 103 is connected to the UTRAN 102 via the Iu interface and to the GGSN 105, and exchanges data and control messages with these components. The SGSN 103 is connected to the HLR 104 via a Gr interface, and manages the subscriber information and location information.

The HLR 104 stores subscriber information and routing information of a packet domain. The HLR 104 is also connected to the SGSN 103. Of course, the HLR 104 can be located in a public land mobile network (PLMN) considering roaming of the UE 101. The GGSN 105 is an end of GTP in the UMTS network, and can be connected to an external network via a Gi interface to interwork with the Internet, a packet domain network (PDN) or another PLMN. In addition, the GGSN 105 is connected to the BM-SC 106 via a Gi interface. The BM-SC 106 is connected to the contents provider 109 via a Gn/Gp interface, and performs authentication on the contents provider 109, quality decision on an MBMS service, error correction for an MBMS data loss, and accounting. The content provider 109 provides MBMS contents to the BM-SC 106. The GGSN 105 is connected to the BG 108 via a Gi interface, and the BG 108 receives MBMS data from a multicast broadcast source existing in a network not managed by the current MBMS provider, and transmits the received MBMS data to the GGSN 105. The GGSN 105 and the BG 108 are connected to the multicast broadcast sources 107 and 110 via Gi interfaces, respectively. Though not illustrated in FIG 1, in order to deliver previous information of a current MBMS service to the UE 101, a cell broadcast center (CBC) can be further added to a network supporting the MBMS service.

FIG. 2 is a block diagram schematically illustrating a structure of the UTRAN 102 of FIG. 1. Referring to FIG. 2, the UTRAN 102 includes a radio network controller (RNC) 200, a plurality of Node Bs 210, 220, and 230 connected to the RNC 200, and a plurality of cells managed by each of the Node Bs. Only the cells 211, 213 and 215 managed by the Node B#1 210 are illustrated in FIG. 2 for simplicity, however, the other Node Bs 220 and 230 also manage cells in the same way. The total number of Node Bs controlled by the RNC 200 and the total number of cells managed by each of the Node Bs can be determined by a service provider of the MBMS network.

A plan to provide an MBMS service to a plurality of UEs in a cell connected state is currently being discussed in 3^{rd} Generation Partnership Project (3GPP). The "cell connected state" refers to a state in which Node Bs know positions of cells to which UEs currently belong, and when the UEs move between the cells in the cell connected state, the Node Bs know a cell to which the UEs move. When the Node B knows a position of a cell to which a UE currently belongs, it will be said that the UE is in a tracking area (TA). Here, the TA indicates an area where a UTRAN knows a cell to which UEs move, even when the UTRAN has a direct signal connection path to the UEs in a cell receiving an MBMS service and the UEs move to different cells. In addition, given that the MBMS service corresponds to packet transmission, the UE can be in a packet mobility management (PMM) connected state.

The MBMS service, because it simultaneously provides a service to a plurality of UEs, may saturate uplink radio resources due to uplink control signaling by a plurality of UEs receiving the MBMS service, and when uplink control signaling messages of the UEs simultaneously arrive at a Node B, the Node B may suffer a control signaling process delay. For these reasons, there is a demand for a method of providing an MBMS service in a non-tracking area (NTA). Here, "providing an MBMS service in a non-tracking area" corresponds to a case where mobility management is not performed on the UEs. In this case, the UEs may be in an idle state where there is no radio resource control (RRC) connection, or may receive an MBMS service during a voice call. When an MBMS service is received during the voice call, this state can be defined as a PMM idle state which is different from the PMM connected state, and in the PMM idle state, mobility management for packet transmission is not performed. In this state, a UTRAN does not have the RRC connection or does not perform UE mobility management for MBMS packet transmission, so it cannot detect movement of the UEs. Here, the NTA indicate an area where the UTRAN can provide an MBMS service to UEs without direct signal connection paths to the UEs when the number of UEs receiving the MBMS service within the current cell is too large or the cell has a poor characteristic, for example, if the cell is located in a spout stadium or a central city, so the UTRAN cannot have separate direction signal connection paths to the UEs. In the NTA, an RRC layer of the UTRAN side does not know a current position of a UE, and even when the UE moves to another cell, the RRC layer fails to detect the movement.

Therefore, when the MBMS service is provided in the NTA, the following problems occur.

First, in the NTA, a UTRAN does not know a position of a UE, and even when the UE moves to another cell, the UTRAN cannot detect a location of the UE in the cell. In this case, the cell to which the UE has moved may not support the MBMS service, or the cell, even though it supports the MBMS service, may not provide the same MBMS service as an MBMS service that the UE is currently receiving. As a result, continuity of the MBMS service for the UE is disordered, causing a decrease in quality of service (QoS). In addition, even though the cell to which the UE has moved supports an MBMS service having the same type as the MBMS service that the UE was receiving, the UE cannot acquire information on a channel over which the MBMS service is provided in the cell to which the UE has moved, i.e., channel information such as physical channel information and transport channel information, and encryption information of MBMS data. Therefore, in the cell to which the UE has moved, the UE cannot normally receive the MBMS data, leading to a reduction in the QoS.

### SUMMARY OF THE INVENTION

It is, therefore, an object of the present invention to provide a system and method for providing an MBMS service to a UE operating in an NTA.

It is another object of the present invention to provide a system and method for providing an MBMS service to a UE operating in an NTA, with minimum signaling.

It is further another object of the present invention to provide a system and method for continuously providing an MBMS service even when a UE operating in an NTA moves to another cell.

In accordance with one aspect of the present invention, there is provided a system for providing a packet service when a user equipment (UE) moves to a second cell while receiving packet service data in a first cell in a mobile communication system including a serving radio network controller (SRNC) managing the first cell serving as a non-tracking area (NTA), a target radio network controller (TRNC) managing the second cell, and a serving GPRS (General Packet Radio Service) support node (SGSN) providing the packet service data. The system comprises the UE for sending a notification indicating cell movement to the TRNC upon detecting movement from the first cell to the second cell, and in response to the cell movement notification, receiving, from the TRNC, information on whether a packet service currently available in the first cell is available in the second cell, and radio resource information necessary for receiving the packet service in the second cell if the packet service currently available in the first cell is available in the second cell, and receiving the packet service from the second cell according to the radio resource information; the TRNC for sending an authentication request for the UE to the SGSN in response to the cell movement notification, and in response to the authentication request, receiving, from the SGSN, information on whether the UE has qualification for receiving the packet service, and packet service information for a packet service that the UE is currently receiving in the first cell, if the UE has qualification for receiving the packet service, and transmitting, to the UE, information on whether the packet service is available if the UE has qualification for receiving the packet service, and radio resource information necessary for providing the packet service if the packet service is available; and the SGSN for transmitting, in response to the authentication request for the UE, to the TRNC, information on whether the UE has qualification for receiving the packet service, and packet service information for a packet service that the UE is currently receiving in the first cell if the UE has qualification for receiving the packet service.

In accordance with another aspect of the present invention, there is provided a method for providing a packet service when a user equipment (UE) moves to a second cell while receiving the packet service in a first cell in a mobile communication system including a serving radio network controller (SRNC) managing the first cell serving as a non-tracking area (NTA), a target radio network controller (TRNC) managing a second cell, and a serving GPRS (General Packet Radio Service) support node (SGSN) providing packet service data. The method comprises the steps of: upon detecting movement from the first cell to the second cell, sending, by the UE, a notification indicating the cell movement to the TRNC; sending, by the TRNC, an authentication request for the UE to the SGSN in response to the cell movement notification; in response to the authentication request, transmitting, by the SGSN to the TRNC, information on whether the UE has qualification for receiving the packet service, and packet service information for a packet service the UE is currently receiving in the first cell if the UE has qualification for receiving the packet service; and if the UE has qualification for receiving the packet service, transmitting, by the TRNC to the UE, information whether a packet service corresponding to the packet service information is available, and radio resource information necessary for providing the packet service when the packet service is available.

In accordance with yet another aspect of the present invention, there is provided a method for providing a packet service when a user equipment (UE) moves to a second cell while receiving the packet service in a first cell in a mobile communication system including a serving radio network controller (SRNC) managing the first cell serving as a non-tracking area (NTA), a target radio network controller (TRNC) managing the second cell, and a serving GPRS (General Packet Radio Service) support node (SGSN) providing packet service data. The method comprises the steps of: upon detecting movement from the first cell to the second cell, sending a notification indicating the cell movement to the TRNC; in response to the cell movement notification, receiving, from the TRNC, information indicating whether a packet service the UE is currently receiving in the first cell is available in the second cell, and packet service information necessary for receiving the packet service in the second cell if the packet service the UE is currently receiving in the first cell is available in the second cell; and receiving the packet service in the second cell according to the packet service information.

In accordance with another aspect of the present invention, there is provided a method for providing a packet service to a user equipment (UE) by a target radio network controller (TRNC) when the UE receiving the packet service in a first cell moves to a second cell in a mobile communication system including a serving radio network controller (SRNC) managing the first cell serving as a non-tracking area (NTA), the TRNC managing the second cell, and a serving GPRS (General Packet Radio Service) support node (SGSN) providing packet service data. The method comprises the steps of: sending an authentication request for the UE to the SGSN upon receiving a notification indicating that the UE receiving the packet service in the first cell moves to the second cell; in response to the authentication request, receiving, from the SGSN, information on whether the UE has qualification for receiving the packet service, and packet service information for a packet service the UE is currently receiving in the first cell, if the UE has qualification for receiving the packet service; and if the UE has qualification for receiving the packet service, transmitting, to the UE, information on whether a packet service corresponding to the packet service information is available, and radio resource information necessary for providing the packet service if the packet service is available.

In accordance with yet another aspect of the present invention, there is provided a method for providing a packet service when a user equipment (UE) moves to a second cell while receiving the packet service in a first cell in a mobile communication system including a serving radio network controller (SRNC) managing the first cell serving as a non-tracking area (NTA), a target radio network controller (TRNC) managing neighbor cells of the first cell, a serving GPRS (General Packet Radio Service) support node (SGSN) providing packet service data. The method comprises the steps of: (a) upon detecting movement from the first cell to a particular cell among the neighbor cells, sending by the UE a cell movement notification to the SRNC; (b) in response to the cell movement notification, determining by the SRNC whether a packet service the UE is currently receiving in the first cell is available in the neighbor cells, and transmitting the determination result to the TRNCs managing the neighbor cells; (c) transmitting, by each of the TRNCs to the UE via the SRNC, information on whether the packet service is available, and radio resource information necessary for providing the packet service in the second service if the packet service is available for the UE; and (d) selecting by the UE a second cell capable of optimally serving the packet service based on the radio resource information received from the TRNC, and receiving the packet service from the second cell.

### BRIEF DESCRIPTION OF THE DRAWINGS

The above and other objects, features, and advantages of the present invention will become more apparent from the following detailed description when taken in conjunction with the accompanying drawings in which:
FIG. 1 is a block diagram schematically illustrating a network configuration for supporting an MBMS service in a mobile communication system;
FIG 2 is a block diagram schematically illustrating a structure of the UTRAN of FIG. 1;
FIG 3 is a signal flow diagram illustrating a procedure for providing a multimedia broadcast/multicast service (MBMS) to a user equipment (UE) located in a non-tracking area (NTA) as proposed in 3^{rd} Generation Partnership Project (3GPP); FIG. 4 is a signal flow diagram illustrating a procedure for providing an MBMS service to a UE existing in an NTA according to a first embodiment of the present invention;
FIG. 5 is a signal flow diagram illustrating a detailed procedure of FIG. 4 for providing an MBMS service to a UE located in an NTA;
FIG. 6 is a flowchart illustrating an operation of a UE according to the first embodiment of the present invention;
FIG. 7 is a flowchart illustrating an operation of a TRNC according to the first embodiment of the present invention;
FIG 8 is a flowchart illustrating an operation of an SGSN according to the first embodiment of the present invention;
FIGs. 9A and 9B are signal flow diagrams illustrating a procedure for providing an MBMS service to a UE located in an NTA according to a second embodiment of the present invention;
FIGs. 10A. to 10C are flowcharts illustrating an operation of a UE according to the second embodiment of the present invention;
FIGs. 11 A to 11 C are flowcharts illustrating an operation of an SRNC according to the second embodiment of the present invention;
FIG. 12 is a flowchart illustrating an operation of a TRNC according to the second embodiment of the present invention; and
FIG. 13 is a flowchart illustrating an operation of an SGSN according to the second embodiment of the present invention.

### DETAILED DESCRIPTION OF THE PREFERRED EMBODIMENT

Several preferred embodiments of the present invention will now be described in detail herein below with reference to the annexed drawings. In the drawings, the same or similar elements are denoted by the same reference numerals even though they are depicted in different drawings. In the following description, a detailed description of known functions and configurations incorporated herein has been omitted for conciseness.

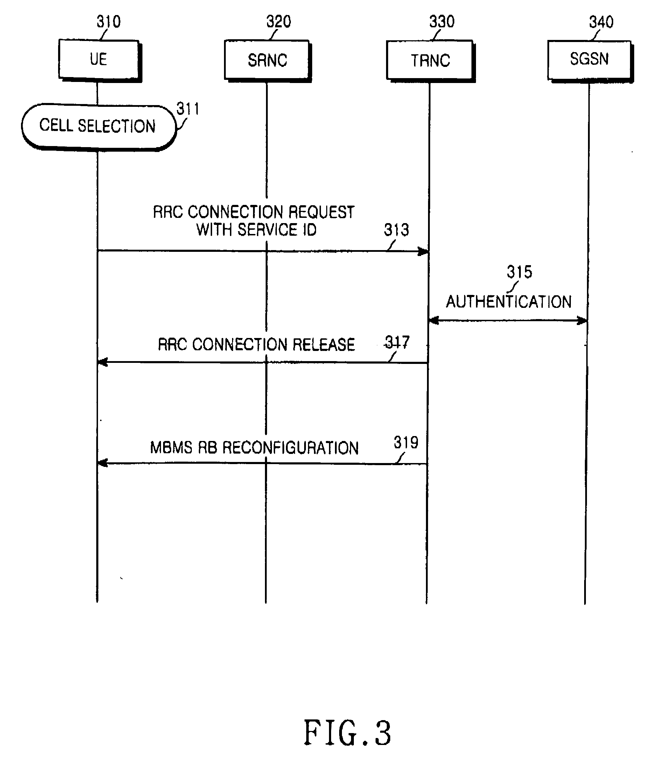

FIG. 3 is a signal flow diagram illustrating a procedure for providing a multimedia broadcast/multicast service (MBMS) to a user equipment (UE) located in a non-tracking area (NTA) as proposed in 3^{rd} Generation Partnership Project (3GPP). It will be assumed in FIG. 3 that a UE 310 is not currently using other services except the MBMS service, and a network configuration used herein is identical to the network configuration described in conjunction with FIG. 1 in the related art section. In addition, it will be assumed that the UE 310 is located in an NTA. Further, a serving radio network controller (SRNC) 320, an RNC from which the UE 310 desires to receive an MBMS service, is connected between the UE 310 and a serving GPRS (General Packet Radio Service) support node (SGSN) 340, and directly serves the MBMS service the UE 310 requested. A target RNC (TRNC) 330 is an RNC managing a cell to which the UE 310 has moved, and can become either the same RNC as the SRNC 320 or a different RNC comparing to the SRNC 320.

Referring to FIG. 3, the UE 310 first performs a cell selection operation (Step 311). There are several possible cell selection criterions. For example, a value determined by comparing a level of a downlink pilot channel signal from a cell to which the UE 310 belongs with levels of downlink pilot channel signals from neighbor cells of the cell to which the UE 310 belongs can become a cell selection criterion. When the UE 310 is in an idle state, the UE 310 performs the cell selection operation by itself. In FIG 3, it will be assumed that through the cell selection operation, the UE 310 selects any one of the cells managed by the TRNC 330. The UE 310 transmits an RRC (Radio Resource Control) connection request message to an RNC where the cell selected in the cell selection operation exists, i.e., the TRNC 330 (Step 313). Here, even though the SRNC 320 and the TRNC 330 are the same RNC, the UE 310 must transmit the RRC connection request message after cell selection. More specifically, because the UE 310 is located in an NTA, the SRNC 320 and the TRNC 330 do not know which cell the UE 310 is located in. The RRC connection request message is a message for requesting setup of an RRC connection for signaling between the UE 310 and the TRNC 330. When an RRC connection is set up between the UE 310 and the TRNC 330 by the RRC connection request message, the UE 310 transitions from the NTA to a tracking area (TA), and thus, the TRNC 330 can detect a position of the UE 310. Currently, 3GPP considers a method of transmitting the RRC connection request message with an MBMS Service ID indicating a type of an MBMS service the UE 310 is currently receiving so that the UE 310 can continuously receive the MBMS service even though it is located in the NTA. If the UE 310 transmits the RRC connection request message with the MBMS Service ID, the TRNC 330 performs a series of operations for continuously providing an MBMS service corresponding to the MBMS Service ID to the UE 310. That is, through an authentication operation with the SGSN 340, the TRNC 330 determines whether the UE 310 has a qualification for receiving the MBMS service corresponding to the MBMS Service ID, and also determines whether it is serving the MBMS service corresponding to the MBMS Service ID (Step 315).

If it is possible to provide the MBMS service, the TRNC 330 transmits an RRC connection release message to the UE 310 (Step 317). Here, the RRC connection release message includes information indicating whether the MBMS service requested by the UE 310 is available. Thereafter, the TRNC 330 transmits radio bearer (RB) information needed when the TRNC 330 provides the MBMS service, to the UE 310 over a notification control channel (NCCH) (Step 319). A format of the RRC connection request message is illustrated in Table 1 below.

**Table 1**

| Information Element | Contents | Remarks |
|---|---|---|
| Message Type | RRC connection | |
| Initial UE identity | TMSI. TMSI, and PLMN ID of a UE | |
| Establishment cause | Cause for RRC connection | |
| Protocol Error Indicator | Part indicating whether an error has occurred in protocol | |
| Measurement results on RACH | Measurement results on a cell to which a UE belongs, and its adjacent cells | |
| Access Stratum Release Indicator | ID indicating release for an access stratum | Unconcerned with an R99 UE |

The RRC connection request message includes a plurality of information elements (IEs) shown in Table 1. More specifically, the RRC connection request message includes an Initial UE identity IE containing IMSI (International Mobile Subscriber Identity) for identifying the UE 310, TMSI (Temporal Network Subscriber Identity) used in a network, and LAI (Location Area Identity) for the network; an Establishment cause IE indicating why an RRC connection is necessary; a Protocol Error Indicator IE indicating an error in a protocol; a Measurement results on RACH IF indicating measurement results by the UE 310 on radio signal measurement information of a cell where the UE 310 is located and radio signal measurement information for neighbor Node Bs; and an Access Stratum Release Indicator IE indicating release of an access stratum (AS).

A size of an RRC message that can actually be physically transmitted is restrictive, and when 16 bits or 32 bits are added for the MBMS service ID, the RRC connection request message with the MBMS Service ID cannot exceed a transmission limit of a random access channel (RACH) that transmits the RRC connection request message. Even though it is assumed that the RRC connection request message can be transmitted, an NCCH signal must be re-transmitted in order to transmit RB information required for providing the MBMS service, causing a waste of downlink radio resources. The waste of downlink radio resources reduces the entire system performance. Therefore, the present invention proposes a method for providing an MBMS service to a UE located in an NTA while minimizing a waste of downlink radio resources and minimizing uplink signaling.

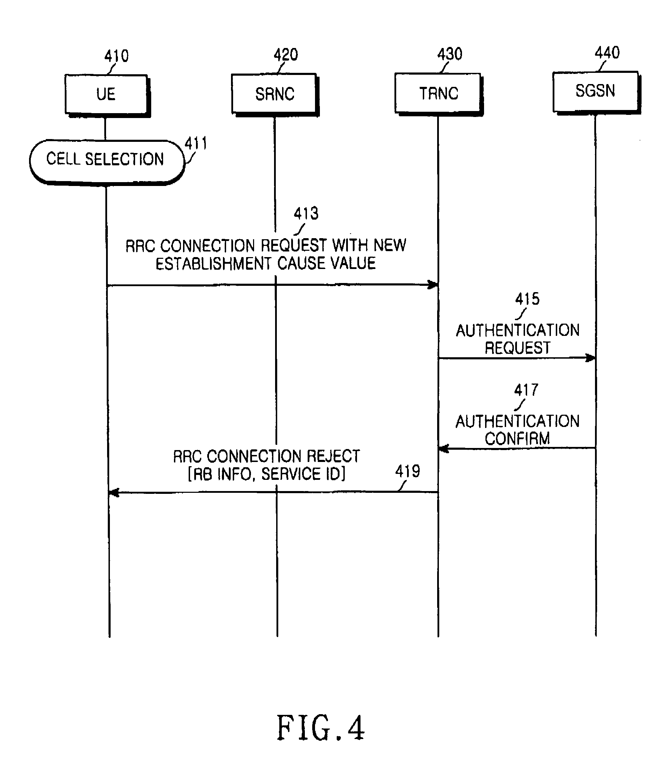

FIG. 4 is a signal flow diagram illustrating a procedure for providing an MBMS service to a UE located in an NTA according to a first embodiment of the present invention. It will be assumed in FIG 4 that a UE 410 does not use other services except the MBMS service. However, even though in reality the UE 410 uses the other services, the present invention can still be applied.

Referring to FIG. 4, the UE 410 is a UE that is located in an NTA and is requesting an MBMS service. An SRNC 420, an RNC from which the UE 410 requesting the MBMS service, is connected between the UE 410 and an SGSN 440 and directly serves the MBMS service the UE 410 requested. A TRNC 430 is an RNC managing a cell to which the UE 410 has moved, and can become either the same RNC as the SRNC 420 or a different RNC comparing to the SRNC 420.

Referring to FIG. 4, the UE 410 first performs a cell selection operation (Step 411). The cell selection operation is identical to the cell selection operation described in conjunction with FIG. 3, so a detailed description thereof will be omitted for simplicity. In FIG. 4, it will be assumed that through the cell selection operation, the UE 410 selects any one of the cells managed by the TRNC 430.

The UE 410 transmits an RRC connection request message to an RNC where the cell selected in the cell selection operation exists, i.e., the TRNC 430 (RRC connection request with New establishment cause) (Step 413). The RRC connection request message used herein is identical in format to an RRC connection request message used in the current 3GPP standard, and includes a new establishment cause IE in order to indicate that the UE 410 desires to continuously receive its current MBMS service. A format of the RRC connection request message used in the current 3GPP standard is identical to the message format described in conjunction with Table 1. In the RRC connection request message described with reference to Table 1, an Establishment cause IE indicating why an RRC connection is needed has values of Originating Conversational Call, Originating Streaming Call, Originating Interactive Call, Originating Background Call, Originating Subscribed call, Originating Background Call, Originating Subscribed Traffic call, Terminating Conversational Call, Terminating Streaming Call, Terminating Interactive Call, Terminating Background Call, Emergency Call, Inter-RAT Cell reselection, Inter RAT-cell change order, Registration, Detach, Originating High Priority Signaling, Originating Low Priority Signaling, Low Priority Signaling, Call reestablishment, Terminating High Priority Signaling, Terminating low priority Signaling, and Terminating. Functions of the values of the Establishment cause IE are defined in "25.331 Radio Resource Control" of the 3GPP standard. However, the present invention has nothing to do with the functions of the existing values of the Establishment cause IE, so a detailed description thereof will be omitted for simplicity.

In addition to the existing values of the Establishment cause IE, the embodiment of the present invention adds a new value of the Establishment cause IE, i.e., a new value called "MBMS Service request," in order to enable the UE 410 to continuously receive the MBMS service. The MBMS Service Request is a value indicating that a UE desires to continuously receive an MBMS service even in another cell, given that the UE receiving the MBMS service in an NTA may move to another cell according to measurement results on neighbor cells.

The TRNC 430 analyzes the RRC connection request message received from the UE 410. As a result of analyzing the RRC connection request message, because the Establishment cause is set with the MBMS Service request, the TRNC 430 starts a series of operations for continuously providing the MBMS service the UE 410 is currently receiving, even in the TRNC 430.

The operations for continuously providing by the TRNC 430 the MBMS service that the UE 410 is current receiving include a first operation in which the TRNC 430 performs authentication on the UE 410 and a second operation in which the TRNC 430 informs the SGSN 440 that the UE 410 desires to continuously receive the current MBMS service. In order to authenticate the UE 410, the TRNC 430 uses an initial UE identity included in the received RRC connection request message. Here, a combination of International Mobile Subscriber Identity (IMSI), Temporal Network Subscriber Identity (TMSI), and Location Area Identity (LAI) used in 3GPP, or a combination of packet-TMS1 (P-TMSI) and Routing Area Identity (RAI) can be used as the initial UE identity.

The TRNC 430 transmits an Authentication request message to the SGSN 440 along with the initial UE identity of the UE 410 and information indicating that the UE 410 desires to continuously receive the current MBMS service (Step 415). Upon receiving the Authentication request message, the SGSN 440 determines whether the UE 410 is qualified for receiving the corresponding MBMS service, depending on the initial UE identity included in the received Authentication request message. For example, the SGSN 440 can determine whether the UE 410 has subscribed for the MBMS service. Because the UE 410 might have subscribed for several types of MBMS services, the SGSN 440 gathers information on all types of MBMS services for which the UE 410 have currently subscribed. For ease of description, it will be assumed in FIG 4 that a type of the MBMS service provided in a cell to which the UE 410 currently belongs is identical to a type of the MBMS service provided in a cell to which the UE 410 will move. Of course, a type of the MBMS service provided in a cell to which the UE 410 currently belongs can be different from a type of the MBMS service provided in a cell to which the UE 410 will move, and a detailed description thereof will be made later.

The SGSN 440 transmits an Authentication confirm message to the TRNC 430 along with information indicating whether the UE 410 has qualification for receiving the MBMS service and information on the types of the MBMS services that the UE 410 is currently receiving (Step 417). Upon receiving the Authentication confirm message, the TRNC 430 analyzes information included in the received Authentication confirm message, and transmits an RRC connection reject message to the UE 410 along with MBMS Service ID indicating a type of the MBMS service that the UE 410 will receive and RB information necessary for the MBMS service (RRC connection reject [RB info, Service ID]) (Step 419). Upon receiving the RRC connection reject message, the UE 410 moves to a new cell and continuously receives the MBMS service in an NTA.

In the current 3GPP standard, an RRC connection reject and an RRC connection setup message are used in response to the RRC connection request message. The RRC connection reject message is a message used when a UTRAN (UMTS (Universal Mobile Telecommunications System) Radio Access Network) rejects an RRC connection requested by a UE, while the RRC connection setup message is a message for approving the RRC connection requested by the UE and at the same time, transmitting all information (ID that the UE will use in the UTRAN, and information on logical channel, transport channel and physical channel over which downlink and uplink transmissions will be performed by the UE and the UTRAN) for communication with the UE. In the first embodiment of the present invention, the reason for using the RRC connection reject message in response to the RRC connection request message will be described herein below.

A UE at issue in the embodiment of the present invention is a UE located in an NTA, and the UE does not want an RRC connection, but information on a channel over which MBMS data can be received, in order to prevent possible discontinuous reception of the MBMS data, which may be caused by movement of the UE. That is, the UE is enabled to know only the channel information for receiving the MBMS data, so that it is not necessary to hold an RRC connection. If all UEs are in an RRC connection state, a signaling load on the UTRAN will be increased. Therefore, the present invention provides a method for enabling the UE to receive MBMS data even when a corresponding cell operates as an NTA. Therefore, no separate RRC connection is necessary for the UE, so the RRC connection reject message is used rather than the RRC connection setup message in the embodiment of the present invention. Of course, although the RRC connection setup message is used instead of the RRC connection reject message, it is possible to guarantee continuity of the MBMS service for a UE existing in a cell operating as an NTA by adding a new Cause value to the RRC connection request message proposed in the embodiment of the present invention. Nevertheless, in the first embodiment of the present invention, the RRC connection reject message is used rather than the RRC connection setup message because a UE must retransmit an RRC connection setup confirm message to an SRNC in response to reception of the RRC connection setup message if the RRC connection setup message is used.

In addition, only after transmitting the RRC connection setup confirm message, the UE can receive MBMS-related information, and after receiving the MBMS-related information, the UE receives an RRC connection release message from the UTRAN. Moreover, in response to the received RRC connection release message, the UE can retransmit an RRC connection release confirm message to the SRNC, and only after transmitting the RRC connection release confirm message, the UE can return to the NTA. That is, a time required when the RRC connection setup message is used is much longer than a time required when the RRC connection reject message is used.

A format of the RRC connection reject message used in the current 3GPP standard is illustrated in Table 2 below.

**Table 2**

| Information Element | Contents | Remarks |
|---|---|---|
| Message Type | RRC connection Reject | |
| RRC Transaction Identifier | Identifier for RRC transaction | |
| Initial UE identity | IMSI, TMSI, and PLMN ID of a UE | |
| Rejection cause | It is cause for RRC connection rejection, and used in rejecting request not defined in establishment cause of RRC connection request or making rejection for congestion. | |
| Waiting indicator | It indicates a time for which a UE must wait until a next attempt after initial RRC connection attempt. A value between 0 to 15 seconds can be received. | |
| Redirection Info | It gives information so that a UE can attempt RRC connection for anther frequency or another radio access technology. | |

The RRC connection reject message format used in the current 3GPP standard has been shown in Table 2. Next, information that must be added to the RRC connection reject message format as proposed in the present invention is illustrated in Table 3 below.

**Table 3**

| Information Element | Contents | Remarks |
|---|---|---|
| MBMS Service identity | Identity of each MBMS service performed in a cell or requested by a UE | |
| RB information | RB information for each MBMS service | |
| Cell ID | ID of a cell in which MBMS service is being performed | |

Illustrated in Table 3 is a Rejection Cause that must be newly added to the RRC connection reject message. As illustrated in Table 3, the Rejection Cause of the RRC connection reject message used in the current 3GPP standard describes only a rejection cause for an RRC connection request message when Congestion occurs for the RRC connection request message of a UE or an undefined value is used as an Establishment Cause value of the RRC connection request message of the UE. However, in the embodiment of the present invention, a Rejection Cause value of MBMS service request acknowledged, or optionally, an MBMS service request refuse cause value is added. The "MBMS service request acknowledged" indicates that an RNC transmitting an RRC connection reject message has detected a continuous MBMS service request from a UE that transmitted an RRC connection request message corresponding to the RRC connection reject message, and the "MBMS Service request refuse" indicates that the UE has no qualification for receiving the MBMS service. In addition, a rejection cause value for a request undefined in Rejection Cause of the RRC connection reject message used in the current 3GPP standard can be used, and it is also possible to express the rejection of an MBMS service request to the UE by giving no value to the new information illustrated in Table 3.

In addition, RB information shown in Table 3 represents information on each RB transmitting types of MBMS services currently requested by a UE that requested reception of an MBMS service through the RRC connection request message, or types of MBMS services being served in a cell where the UE is currently located. The RB information is illustrated in Tables 4 to 9 shown below.

**Table 4**

| Information Element/Group name | Need | Multi | Type and reference | Semantics description | Version |
|---|---|---|---|---|---|
| Message Type | MP | | Message Type | | |
| UE Information Elements | | | | | |
| RRC transaction identifier | MP | | RRC transaction identifier 10.3.3.36 | | |
| Integrity check info | CH | | Integrity check info 10.3.3.16 | | |
| Integrity protection mode info | OP | | Integrity protection mode info 10.3.3.19 | | |
| Ciphering mode info | OP | | Ciphering mode info 10.3.3.5 | | |
| Activation time | MD | | Activation time 10.3,3.1 | Default value is "now" | |
| New U-RNTI | OP | | U-RNTI 10.3.3.47 | | |
| New C-RNTI | OP | | C-RNTI 10.3.3.8 | | |
| New DSCH-RNTI | OP | | DSCH-RNTI 10.3.3.9a | | |
| New H-RNTI | OP | | H-RNTI 10.3.3.14a | | REL-5 |
| RRC Status Indicator | MP | | RRC Status Indicator 10.3.3.10 | | |
| UTRAN DRX cycle length coefficient | OP | | UTRAN DRX cycle length coefficient 10.3.3.49 | | |

**Table 5**

| Information Element/Group name | Need | Multi | Type and reference | Semantics description | Version |
|---|---|---|---|---|---|
| CN Information Elements | | | | | |
| CN Information info | OP | | CN Information info 10.3.1.3 | | |
| UTRAN mobility Information elements | | | | | |
| URA identity | OP | | URA identity 10.3.2.6 | | |
| RB Information Elements | | | | | |
| Signaling RB information to setup list | OP | 1 to <maxSRB setup> | | For each signaling radio bearer established | |
| >Signaling B information to setup | MP | | Signaling RB information to setup 10.3.4.24 | | |
| RAB information to setup list | OP | 1 to <maxRAB | | For each RAB established | |
| | | setup> | | | |
| >R.AB information for setup | MP | | RAB information for setup 10.3.4.10 | | |
| RB information to be affected list | OP | 1 to <maxRB> | | | |
| >RB information to be effected | MP | | RB information to be affected 10.3.4.17 | | |
| Downlink counter synchronization info | OP | | | | |
| >RB with PDCP information list | OP | 1 to <maxRB allRABs> | | | |

**Table 6**

| Information Elament/Group name | Need | multi | Type and reference | Semantics description | Version |
|---|---|---|---|---|---|
| >>EtB with PDCP information | MP | | RB with PDCP information 10.3.4.22 | This IE is needed for each RB having PDCP in the case of lossless SRNS relocation | |
| | OP | | | | REL-5 |
| >>PDCP context info | OP | | PDCP context relocation info 10.3.4.1a | This IE is needed for each RB having PDGPand performing PDCP context relocation | REL-5 |
| TrCH Information Elements | | | | | |
| Uplink transport channels | | | | | |
| UL Transport channel information common for all transport channels | OP | | UL Transport channel information common for all transport channels 10.3.5.24 | | |
| Deleted TrCH information list | OP | 1 to <maxTrCH> | | | |
| >Deleted UL TrCH information | MP | | Deleted UL TrCH information 10.3.5.5 | | |
| Added or Reconfigured TrCH information list | OP | 1 to <maxTrCH> | | | |
| >Added or Reconfigured UL TrCH information | MP | | Added or Reconfigured UL TrCH information 10.3.5.2 | | |

**Table 7**

| Information Element/Group name | Need | Multi | Type and reference | Semantics description | Version |
|---|---|---|---|---|---|
| CHOICE mode | OP | | | | |
| >FDD | | | | | |
| >>CPCH set ID | OP | | CPCH set ID 10.3.5.3 | | |
| >>Added or Reconfigured TrCH information for DRAC list | OP | 1 to <maxTrCH> | | | |
| >>>DRAC static information | MP | | DRAC static information 10.3.5.7 | | |
| >TDD | | | | (no data) | |
| **Downlink transport channels** | | | | | |
| DL Transport channel information for all transport channels | OP | | DL Transpou channel information for all transport channels 10.3.5.6 | | |
| Deleted TrCH information list | OP | 1 to <maxTrCH> | | | |
| >Deleted DL TrCH information | MP | | Deleted DL TrCH information 10.3.5.4 | | |
| Added or Reconfigured TrCH information list | OP | 1 to <maxTrCH> | | | |
| >Added or Reconfigured DL TrCH information | MP | | Added or Reconfigured DL TrCH information 10.3.5.1 | | |

**Table 8**

| Information Element/Group name | Need | Multi | Type and reference | Semantics description | Version |
|---|---|---|---|---|---|
| PhyCH information elements | | | | | |
| Frequency info | MD | | Frequency info 10.3.6.36 | Default value is the existing value of frequency information | |
| Uplink radio resources | | | | | |
| Maximum allowed UL TX power | MD | | Maximum allowed UL TX power 10.3.6.39 | Default value is the existing maximum UL TX power | |
| CHOICE channel requirement | OP | | | | |
| | | | | | |
| >Uplink DPCH info | | | Uplink DPCH info 10.3.6.88 | | |
| >CPCH SET info | | | CPCH SET info 10.3.6.13 | | |
| Downlink radio resources | | | | | |
| CHOICE mode | MP | | | | |
| >>FDD | | | | | |
| >>Downlink PDSCH information | OP | | Downlink PDSCH information 10.3.6.30 | | |
| >TDD | | | | (no data) | |
| Downlink HS-PDSCH information | OP | | Downlink HS-PDSCH information 10.3.6.23a | | REL-5 |
| Downlink information common for all radio links | OP | | Downlink information common for all radio links 10.3.8.24 | | |

**Table 9**

| Information Element/Group name | Need | multi | Type and reference | Semantics description | Version |
|---|---|---|---|---|---|
| Downlink information per radio link list | OP | 1 to <maxRL> | | Send downlink Information for each radio link | |
| >Downlink information for each radio link | MP | | Downlink information for each radio link 10.3.6.27 | | |

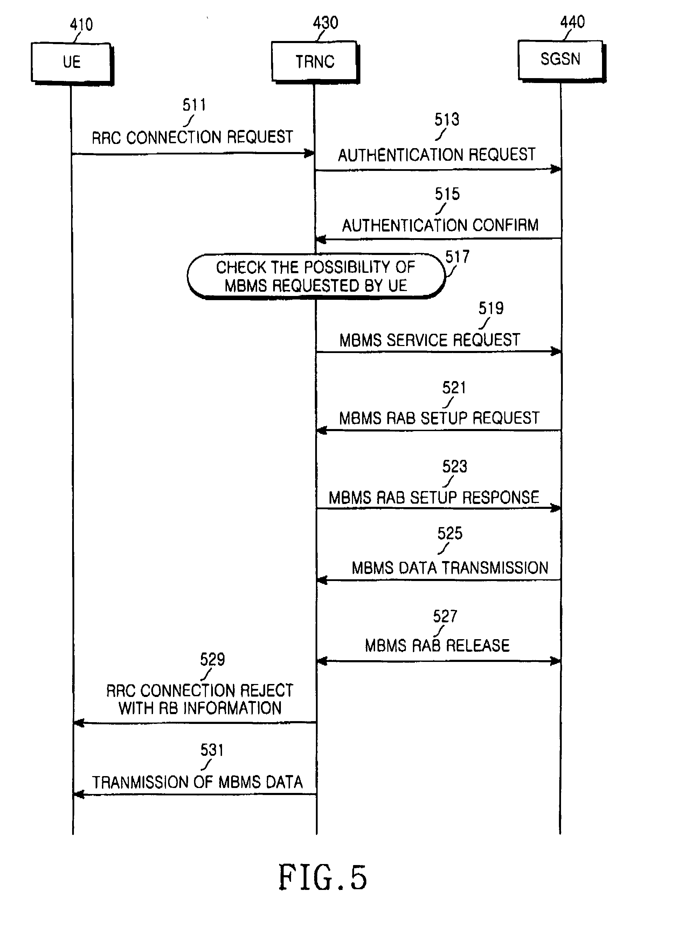

FIG. 5 is a signal flow diagram illustrating a detailed procedure of FIG. 4 for providing an MBM S service to a UE located in an NTA. Referring to FIG. 5, a UE 410 first performs the cell selection operation described in FIG. 4, and then transmits an RRC connection request message to a TRNC 430, an RNC of a cell to which it belongs (Step 511). The RRC connection request message, includes information indicating that the UE 410 desires to continuously receive the current MBMS cell even in the cell to which it will move. Upon receiving the RRC connection request message, the TRNC 430 transmits an Authentication request message for requesting authentication for the UE 410 to an SGSN 440 (Step 513). Upon receiving the Authentication request message, the SGSN 440 performs an authentication operation on the UE 410, and then transmits an Authentication Confirm message with the authentication result to the TRNC 430 (Step 515). The authentication operation, as stated above, is performed using an initial UE identity of the UE 410 included in the RRC connection request message, and in this operation, the SGSN 440 determines whether the UE 410 has qualification for receiving an MBMS service, and detects a type of a requested MBMS service that the UE 410 desires to continuously receive.

Based on the authentication result between the TRNC 430 and the SGSN 440, the TRNC 430 determines whether it can continuously provide the requested MBMS service to the UE 410 (check the possibility of MBMS requested by UE) (Step 517). The operation performed by the TRNC 430 based on the authentication result can be roughly divided into the following 4 operations.

First, as the result of the authentication, when the UE 410 has no qualification for receiving the MBMS service, i.e., when authentication for the UE 410 has failed, the TRNC 430 transmits to the UE 410 an RRC connection reject message including information indicating that the UE 410 is unqualified to receive the MBMS service, notifying that continuous supply of the MBMS service is unavailable. A method for notifying an impossibility of the continuous supply of the MBMS service requested by the UE 410 through the RRC connection reject message can be divided into 3 methods. A first method uses a Rejection cause value of the RRC connection reject message, and in this method, the TRNC 430 notifies the impossibility of supplying the MBMS service requested by the UE 410 using a Rejection cause value unused in the current 3GPP standard. A second method notifies the impossibility of supplying the MBMS service requested by the UE 410 by transmitting an RRC connection reject message without MBMS Service ID and RB information for the MBMS service described in connection with Table 3. A third method uses a Rejection cause value of the RRC connection reject message, and in this method, the TRNC 430 notifies the impossibility of supplying the MBMS service requested by the UE 410 using a new Rejection cause value.

Second, as the result of the authentication, when the UE 410 has qualification for receiving the MBMS service, i.e., when authentication for the UE 410 was successful, i.e., when the TRNC 430 has received from the SGSN 440 information indicating that the UE 410 has qualification for receiving the MBMS service and an MBMS service list for the MBMS service the UE 410 is currently receiving, there is a case where MBMS services corresponding to all MBMS Service IDs existing in the MBMS service list are available in the cell to which the UE 410 will move. When MBMS services corresponding to all MBMS Service IDs existing in the MBMS service list are available in the cell where the UE 410 is currently located, the TRNC 430 transmits an RRC connection reject message along with the MBMS Service IDs and information on an RB over which the MBMS data is actually transmitted (RRC connection reject with RB information) (Step 529). The UE 410 then analyzes MBMS Service IDs and RB information included in the RRC connection reject message, and continuously receives its current MBMS service.

Third, as the result of the authentication, when the UE 410 is qualified to receive the MBMS service, there is a case where MBMS services corresponding to all or some of MBMS Service IDs existing in the MBMS service list are unavailable in the cell to which the UE 410 will move. When MBMS services corresponding to all or some of MBMS Service IDs existing in the MBMS service list are unavailable in the cell to which the UE 410 will move, the TRNC 430 determines whether it can additionally provide the MBMS service requested by the UE 410, and if the TRNC 430 can additionally provide the MBMS service requested by the UE 410, it transmits an MBMS service request message to the SGSN 440 (Step 519). The MBMS service request message includes an MBMS Service ID representing a desired MBMS service, and the MBMS service request message serves as a message for requesting MBMS data corresponding to the included MBMS Service ID.

Upon receiving the MBMS service request message, the SGSN 440 detects an MBMS Service ID included in the MBMS service request message, and transmits an MBMS RAB setup request message to the TRNC 430 in order to set up a radio access bearer (RAB) for transmitting MBMS data corresponding to the detected MBMS Service ID (Step 521). Upon receiving the MBMS RAB setup request message, the TRNC 430 sets up an MBMS RAB to the SGSN 440 and then transmits to the SGSN 440 an MBMS RAB setup response message indicating completed setup of the MBMS RAB (Step 523). When the MBMS RAB is set up between the TRNC 430 and the SGSN 440, the SGSN 440 transmits MBMS data to the TRNC 430 over the set-up MBMS RAB (transmission of MBMS data) (Step 525). After receiving the MBMS data, the TRNC 430 transmits an RRC connection reject message to the UE 410 along with the MBMS Service ID and information on an RB over which the MBMS data is to be transmitted (Step 529).

A process of releasing the MBMS RAB between the TRNC 430 and the SGSN 440 (MBMS RAB release; Step 527) is performed according to a type of the MBMS data transmitted over the MBMS RAB or a data transmission rule between an SGSN and an RNC, before or after the RB information is transmitted to the UE 410. The "type of the MBMS data" can represent a real-time service type or a non-real-time service type, and the "data transmission rule between an SGSN and an RNC" can represent a rule stipulating that before reception of MBMS data from an SGSN is completed, an RNC cannot transmit the MBMS data to a UE, or even before completion of the data reception, the RNC can transmit the MBMS data.

Fourth, there is a case where the TRNC 430 transmits to the UE 410 information indicating that the UE 410 can receive the MBMS service and an MBMS service list for the MBMS service the UE 410 is currently receiving. If some of MBMS service IDs existing in the MBMS service list (or MBMS service ID list) are available while the other MBMS service IDs are unavailable, then the TRNC 430 transmits an RRC connection reject message to the UE 410 along with only the available MBMS service IDs after performing the third operation. The UE 410 then determines that it can receive only the MBMS services corresponding to the MBMS service IDs included in the RRC connection reject message. As a method of notifying the UE 410 that there are unavailable MBMS services, the TRNC 430 can add MBMS service IDs of MBMS services that the UE was receiving, and IDs associated with the MBMS service IDs, representing availability of the MBMS services, to the RRC connection reject message.

Cause values that can be newly added to the RRC connection reject message described in connection with FIG. 5 are illustrated in Table 10 below.

**Table 10**

| Cause value | Contents | Remarks |
|---|---|---|
| MBMS Service request acknowledged | MBMS service requested by a UE is acknowledged. | |
| MBMS Service request refused | A UE is not qualified to receive requested MBMS services. | |
| MBMS Service request not supported | A UE is qualified to receive requested MBMS services, but the MBMS services are unavailable in a cell where the UE is currently located. | |

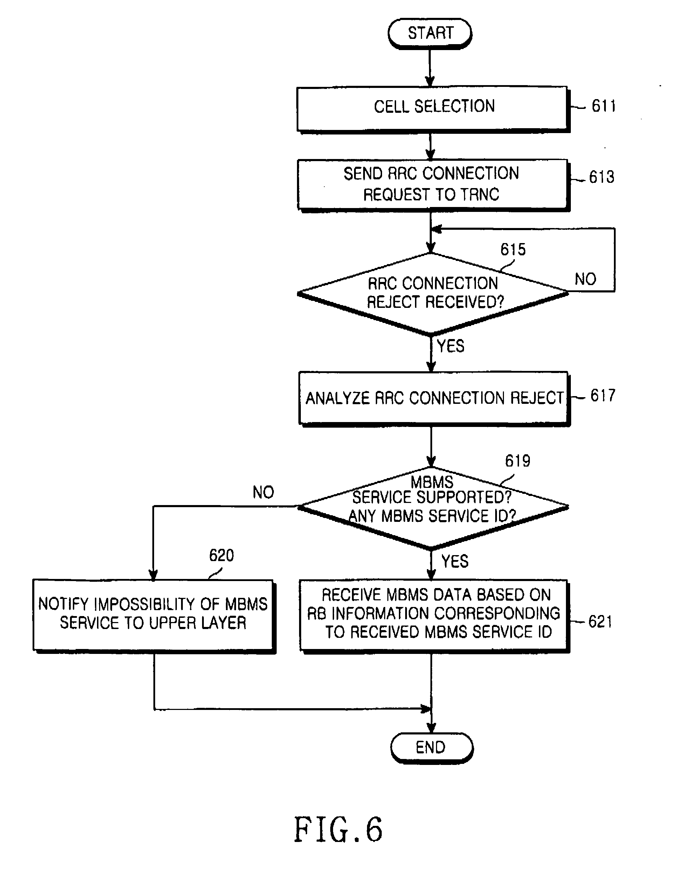

FIG. 6 is a flowchart illustrating an operation of a UE according to the first embodiment of the present invention. Referring to FIG. 6, the UE performs a cell selection operation in step 611. In the cell selection operation, a cell transmitting a radio signal, e.g., a pilot channel signal, having the highest strength, is selected among neighbor cells of the UE. In step 613, the UE sets an RRC establishment cause value indicating that it desires to continuously receive the current MBMS service, and transmits an RRC connection request message with the set RRC establishment cause value to a TRNC, i.e., an RNC to which the cell selected in the cell selection operation belongs. Because the RRC establishment cause value indicating that the UE desires to continuously receive the current MBMS service has been described above, a detailed description thereof will be omitted here for simplicity. In step 615, the UE determines whether an RRC connection reject message is received from the TRNC in response to the RRC connection request message. If the RRC connection reject message is received, the UE proceeds to step 617.

In step 617, the UE analyzes the received RRC connection reject message. Here, analyzing the received RRC connection reject message is equivalent to analyzing a cause value of the RRC connection reject message. In step 619, the UE determines whether receiving an MBMS service is possible, based on the cause value of the RRC connection reject message, and if possible, the UE determines whether there is a corresponding MBMS service ID. As a result of the determination, if receiving the requested MBMS service is impossible, the UE proceeds to step 620. When receiving the requested MBMS service is impossible, a cause value of the RRC connection reject message is set to an 'MBMS service request refused' cause value or an 'MBMS service request not supported' cause value. In step 620, the UE notifies an upper layer that continuously receiving the MBMS service is impossible, and then ends the procedure. When the cause value of the RRC connection reject message is set to the 'MBMS service request not supported' cause value, the UE can request the MBMS service once again later using the RRC connection request message.

If it is determined in step 619 that receiving the requested MBMS service is possible, the UE proceeds to step 621. When receiving the requested MBMS service is possible, the cause value of the RRC connection reject message is set to an 'MBMS service request acknowledged' cause value. In step 621, the UE receives MBMS data from the TRNC using MBMS Service IDs included in the RRC connection reject message and RB information corresponding to the MBMS service IDs, and then ends the procedure. The MBMS Service IDs included in the RRC connection reject message can become all of the requested MBMS Service IDs that the UE desires to continuously receive, or some of the requested MBMS Service IDs that the UE desires to continuously receive.

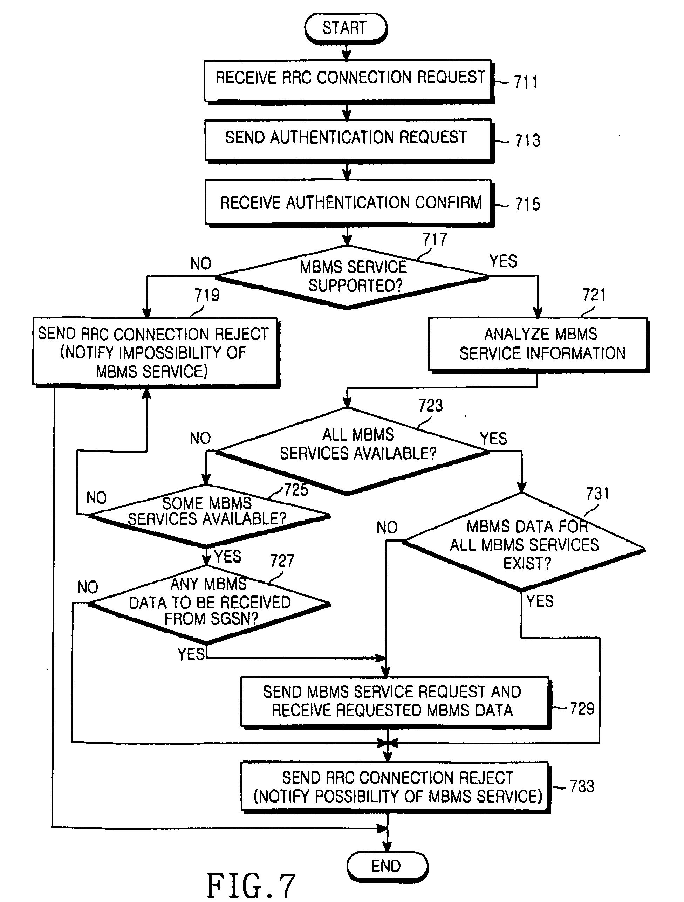

FIG. 7 is a flowchart illustrating an operation of a TRNC according to the first embodiment of the present invention. Referring to FIG. 7, the TRNC receives an RRC connection request message from a UE in step 711. In step 713, the TRNC transmits an Authentication request message to an SGSN using an initial UE identity included in the RRC connection request message received from the UE. In step 715, the TRNC receives an Authentication confirm message from the SGSN in response to the Authentication request message. The Authentication confirm message includes authentication information for the UE and MBMS service information for the MBMS services that the UE is currently receiving. The "authentication information for the UE," as described above, refers to information indicating whether the UE is qualified to receive the MBMS service, and the "MBMS service information" refers to an MBMS service ID list for the MBMS services that the UE is currently receiving. In step 717, the TRNC determines whether the UE can continuously receive the MBMS service, based on the authentication information and the MBMS service information included in the Authentication confirm message. If the UE cannot continuously receive the MBMS service, the TRNC proceeds to step 719. In step 719, the TRNC notifies the UE that the UE cannot continuously receive its current MBMS service, by transmitting an RRC connection reject message with an 'MBMS Service request refused' cause value, and then ends the procedure. Also, the TRNC can notify UE that it cannot continuously receive its current MBMS service, by transmitting the RRC connection reject message containing an undefined cause value unused in the current 3GPP standard.

However, if it is determined in step 717 that the UE can continuously receive the MBMS service, the TRNC proceeds to step 721. In step 721, the TRNC analyzes MBMS service information for the UE, Here, the "MBMS service information" refers to an MBMS service ID list representing the MBMS services that the UE is currently receiving, i.e., the UE is receiving in a previous cell. In step 723, the TRNC determines whether all the requested MBMS services that the UE desires to continuously receive are available. If all the MBMS services requested by the UE are unavailable, i.e., if some of the MBMS services requested by the UE are available or if all of the MBMS services requested by the UE are unavailable, then the TRNC proceeds to step 725.

In step 725, the TRNC determines whether some of the MBMS services requested by the UE are available. If none of the MBMS services requested by the UE are available due to cell circumstances, the TRNC proceeds to step 719. For example, the "cell circumstances" refer to a case where because other MBMS services are being served in the cell to which the UE will move, the MBMS services requested by the UE cannot be additionally supported. In step 719, the TRNC notifies that the UE cannot continuously receive its current MBMS service, by transmitting to the UE an RRC connection reject message with an 'MBMS Service request not supported' value, and then ends the procedure.

If it is determined 725 that some of the MBMS services requested by the UE are available, the TRNC proceeds to step 727. In step 727, because some of the MBMS services requested by the UE are available, the TRNC determines whether the TRNC currently has any MBMS data corresponding to the available MBMS services to check whether there is any MBMS data to be received from the SGSN. If there is any MBMS data to be received from the SGSN, the TRNC proceeds to step 729. In step 729, the TRNC sends the SGSN an MBMS service request containing an MBMS service ID corresponding to the MBMS data to be received, and receives the MBMS data from the SGSN in response to the MBMS service request.

After step 729 or if there is not any MBMS data to be received from the SGSN in step 727, in step 733, the TRNC transmits to the UE an RRC connection reject message containing MBMS Service IDs indicating the available MBMS services and RB information needed for receiving the MBMS data corresponding to the MBMS Service IDs, and then ends the procedure.

However, if it is determined in step 723 that all of the MBMS services requested by the UE are available, the TRNC proceeds to step 731. In step 731, the TRNC determines whether there is MBMS data for all of the MBMS services requested by the UE. If MBMS data for all of the MBMS service requested by the UE exists in the TRNC, the TRNC proceeds to step 733. If it is determined that MBMS data for all of the MBMS service requested by the UE does not exist in the TRNC, i.e., if only the MBMS data for some of the MBMS services requested by the UE exists, the TRNC proceeds to step 729.

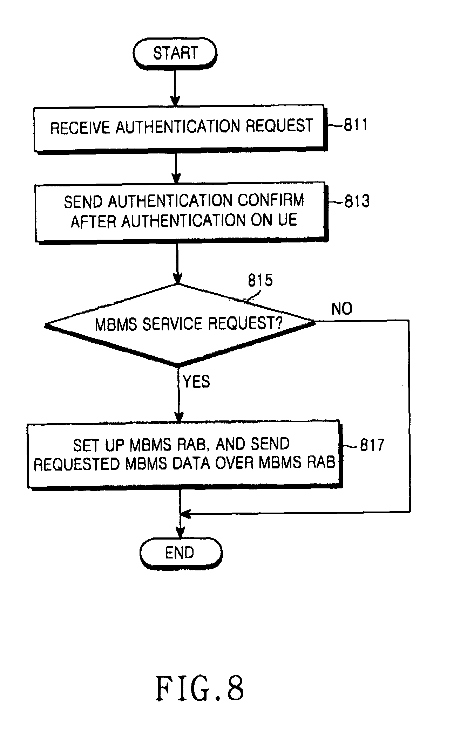

FIG. 8 is a flowchart illustrating an operation of an SGSN according to the first embodiment of the present invention. Referring to FIG. 8, the SGSN receives an Authentication request message for a particular UE from a TRNC in step 811. In step 813, the SGSN performs an authentication operation on a corresponding UE targeted by the Authentication request message to detect authentication information indicating whether the UE is qualified to receive an MBMS service and an MBMS service ID list for the MBMS services being served in the existing cell where the UE is currently located, and transmits an Authentication confirm message to the TRNC along with the detected authentication information and MBMS service ID list.

In step 815, the SGSN determines whether an MBMS service request corresponding to an MBMS Service ID existing in the MBMS service ID list is received from the TRNC. If an MBMS service request corresponding to an MBMS Service ID is not received from the TRNC, the SGSN ends the procedure. However, if an MBMS service request corresponding to an MBMS Service ID is received from the TRNC, the SGSN proceeds to step 817. In step 817, the SGSN sets up an MBMS RAB for transmitting the service-requested MBMS data, transmits corresponding MBMS data to the TRNC over the set-up MBMS RAB, and then ends the procedure.

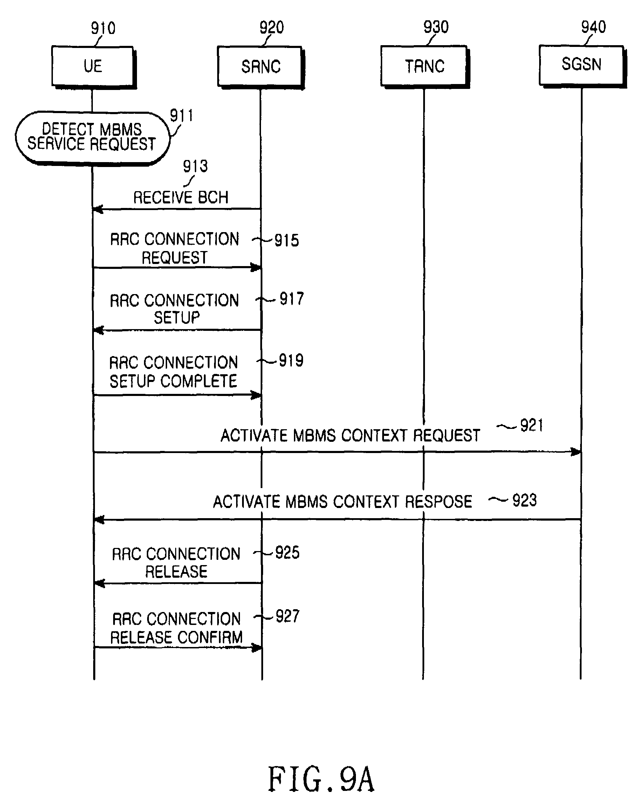

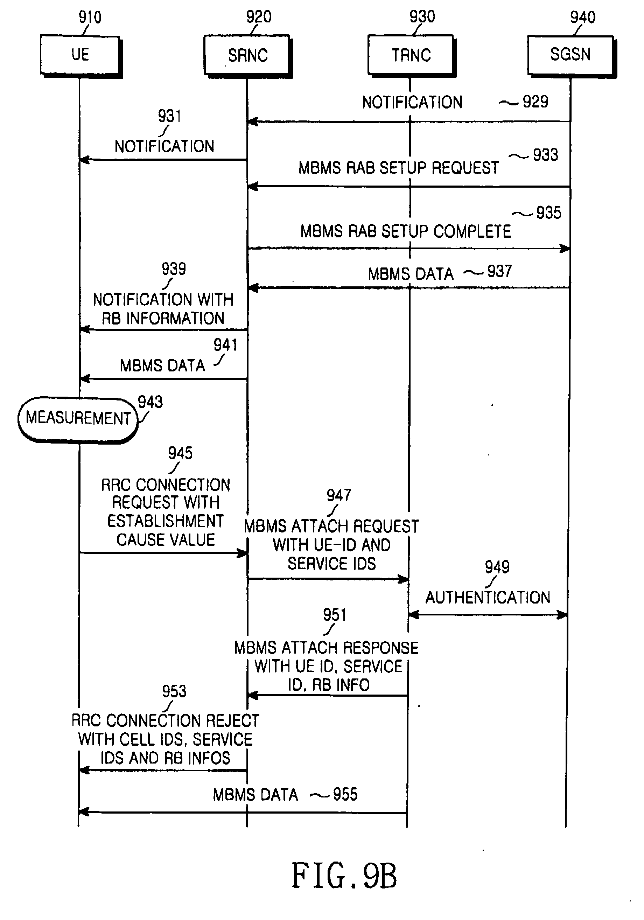

FIGs. 9A and 9B are signal flow diagrams illustrating a procedure for providing an MBMS service to a UE existing in an NTA according to a second embodiment of the present invention. Referring to FIGs. 9A and 9B, a UE 910 detects an MBMS service request of a user (Step 911), and the UE 910 receives a broadcasting channel (BCH) signal from an SRNC 920 and acquires a system information block (SIB) of a cell from which the BCH signal is transmitted (Step 913). Of course, even before the MBMS service request, the UE 910 can receive the BCH signal and acquire system information from the BCH signal, and the system information can include information on a core network (CN), information on a measurement value to be measured by a UE, information a UE must know to access a UTRAN, information on a common channel used in the cell, and information on the corresponding cell, all of which are fundamentally provided in the 3GPP standard. Particularly, in an embodiment of the present invention, the system information includes i) information on whether a cell transmitting the BCH to serve the MBMS service has a TA characteristic or an NTA characteristic, ii) information related to measurement needed for receiving MBMS data when the cell has an NTA characteristic, and iii) information on NCCH over which information related to reception of the MBMS data can be transmitted. That is, in the embodiment of the present invention, the information on whether a cell serving an MBMS service through BCH has a TA characteristic or an NTA characteristic, the information on NCCH for receiving control information related to reception of the MBMS data, and the information related to measurement for guaranteeing continuity of the MBMS service when the cell has an NTA characteristic, must be additionally transmitted. That is, the information on whether a cell serving an MBMS service has a TA characteristic or an NTA characteristic, received over BCH, indicate that the cell serving an MBMS service can operate as (or act as) an NTA or a TA, and even the same cell can operate as a TA or an NTA according to service. If a cell is classified as an NTA or a TA according to service, scheduling is needed for transmitting information over the BCH. In particular, when a pilot channel signal or an MBMS data signal from a neighbor cell is equal to a particular threshold, a UE receiving MBMS data in an NTA performs measurement on the neighbor cell, and to report the result, transmits BCH containing information indicating a time at which measurement is to be performed on the UE receiving MBMS data in the NTA.

After acquiring system information from the received BCH, the UE 910 transmits an RRC connection request message to the SRNC 920 (Step 915). Upon receiving the RRC connection request message, the SRNC 920 transmits an RRC connection setup message to the UE 910 in response to the RRC connection request message (Step 917). Upon receiving the RRC connection setup message, the UE 910 sets up an RRC connection to the SNRC 920 and transmits an RRC connection setup complete message to the SRNC 920 (Step 919). When an RRC connection is set up to the SRNC 920 in this way, the UE 910 transmits an Activate MBMS context request message to an SGSN 940 (Step 921). The Activate MBMS context request message is a message indicating that the UE 910 desires to receive an MBMS service, and in the MBMS context is stored all information related to transmission of MBMS data to the UE 910.

Upon receiving the Activate MBMS context request message from the UE 910, the SGSN 940 activates the MBMS context and then transmits an Activate MBMS context response message to the UE 910 (Step 923). If the UE 910 is not a qualified UE, i.e., if the UE 910 is a UE not qualified to receive an MBMS service, information indicating unavailability of the MBMS service is included in the Activate MBMS context response message. It will be assumed in FIGS. 9A and 9B that the UE 910 is a qualified UE.

Upon receiving the Activate MBMS context response message, the UE 910 receives an RRC connection release message from the SRNC 920 (Step 925). The RRC connection release message is a message transmitted so as to enable the UE 910 to release the RRC connection when the UE 910 fails to receive messages for the RRC connection for a predetermined time in an RRC connection state. Because it is assumed in the second embodiment of the present invention that the UE 910 receives MBMS data in an NTA, the UE 910 does not hold the RRC connection after being authenticated by the SGSN 940. Therefore, the UE 910 notifies release of an RRC connection by transmitting an RRC connection release confirm message to the SRNC 920 (Step 927).

The SGSN 940 transmits to the SRNC 920 a Notification message indicating that the MBMS service requested by the UE 910 will be served soon (Step 929). The SRNC 920 then transmits to the UE 910 a Notification message indicating that the requested MBMS service will be provided soon (Step 931). The SRNC 920 can transmit the Notification message to the UE 910 over a paging indicator channel (PICH). In addition, the SGSN 940 transmits an MBMS RAB setup request message to the SRNC 920 (Step 933). Upon receiving the MBMS RAB setup request message from the SGSN 940, the SRNC 920 transmits an MBMS RAB setup complete message to the SGSN 940 after setting up an MBMS RAB to the UE 910 (Step 935).

When setup of the MBMS RAB is detected, the SGSN 940 transmits the requested MBMS data to the SRNC 920 (Step 937). Upon receiving MBMS data from the SGSN 940, the SRNC 920 transmits RB information to the UE 910 (Step 939). The RB information is transmitted over NCCH or an MBMS control channel (MCCH). Thereafter, the SRNC 920 transmits the MBMS data received from the SGSN 940 to the UE 910 (Step 941). The UE 910 then receives the MBMS data depending upon the RB information received from the SRNC 920. The Notification message can be transmitted together with the RB information.

The UE 910 continuously performs measurement on neighbor cells of its cell while receiving the MBMS data (Measurement) (Step 943). The UE 910 continuously performs measurement on neighbor cells of its cell to guarantee continuity of the current MBMS service because the UTRAN cannot know to which cell the UE 910 will move when the UE 910 moves from the current cell to another cell. That is, because the cell where the UE 910 is located operates as an NTA, the SRNC 920 to which the UE 910 belongs cannot detect to which cell the UE 910 moves when it moves to another cell. Therefore, in order for SRNC 920 to continuously serve the MBMS service by detecting to which cell the UE 910 has moved, the UE 910 should continuously perform measurement on the neighbor cells of the cell where it is currently located.

When the measurement result of the neighbor cells is larger than or equal to a predetermined value, the UE 910 transmits an RRC connection request message to the SRNC 920 (Step 945). The RRC connection request message transmitted in step 945 has a new establishment cause value. That is, the RRC connection request message caused by movement of the UE that was receiving the MBMS service in the NTA is used to request an RRC connection in a new cell in order to continuously receive the MBMS service even in the new cell to which the UE 910 has moved. Generally, however, when the cell where the UE 910 is located operates as an NTA, the UE 910 holds an RRC connection to the UTRAN, but in the second embodiment of the present invention, in order to guarantee continuity of the MBMS service, an RRC connection to the UTRAN is newly set up even though the cell where the UE 910 is located operates as an NTA. This will be described in more detail herein below.

When a particular cell operates as an NTA as stated above, a cell reselection operation is performed in which the UEs receiving MBMS data in a cell where UE mobil ity management is not performed measure their neighbor cells according to system information received over BCH, and select a cell having the most powerful signal among the measured neighbor cells as their cell where they are located. However, although a UE measures its neighbor cells using system information acquired through BCH, the present invention proposes a method of guaranteeing continuity of an MBMS service using the measurement result of the neighbor cells. That is, the RRC connection request message transmitted by the UE 910 in step 945, unlike the RRC connection request message transmitted in step 915, includes the measurement result of the neighbor cells. The RRC connection request message transmitted by the UE 910 in step 945 is identical in format to the general RRC connection request message defined in the 3GPP standard, but includes new information described in connection with Table 1. That is, information indicating that the UE 910 was receiving MBMS data or the UE 910 desires to receive an MBMS service must be newly added to the Establishment cause IE among the IEs of the RRC connection request message, described in conjunction with Table 1. In transmitting the RRC connection request message in step 945, it is important to determine a time at which the UE 910 transmits the RRC connection request message. A process of determining a transmission time of the RRC connection request message by the UE 910 will be described later.

Upon receiving the RRC connection request message, the SRNC 920 analyzes the received RRC connection request message, and since a value of the Establishment cause IE in the received RRC connection request message is set to MBMS Service request, the SRNC 920 performs an operation of continuously providing an MBMS service to the UE 910. First, the SRNC 920 performs an authentication operation on the UE 910 using an initial UE identity in the RRC connection request message. Second, the SRNC 920 transmits an ID of the UE 910 and an MBMS Service ID indicating an MBMS service that the UE 910 is receiving, to RNCs to which neighbor cells of the UE 910 belong, through an MBMS attach request message according to the measurement result reported by the UE 910 (Step 947). When an RNC to which neighbor cells of the UE 910 belong is identical to the SRNC 920, steps 947, 949, and 951 are skipped, and the SRNC allows the UE 910 to continuously receive the MBMS service through an RRC connection reject message, which will be described in step 953.

Upon receiving the MBMS attach request message, a TRNC 930 performs authentication together with the SGSN 940 using a UE ID included in the MBMS attach request message (Step 949), and if the authentication is successful, the TRNC 930 analyzes an MBMS Service ID included in the MBMS attach request message to determine whether the corresponding MBMS service is available. The TRNC 930 transmits information on whether the corresponding MBMS service is available to the SRNC 920 through an MBMS attach response message (Step 951). The MBMS attach response message includes UE ID, MBMS Service ID, and RB information. Information included in the MBMS attach request message and the MBMS attach response message, and operations of the SRNC 920 and the TRNC 930 based on the MBMS attach request message and the MBMS attach response message are illustrated in Table 11 below.

**Table 11**

| Operation of Serving RNC | Operation of Target RNC | Contents of MBMS attach request | Contents of MBMS attach response |
|---|---|---|---|
| Only one RNC and only one Cell ID are selected based on measurement result from UE | Service is in operation or available in cell associated with Cell ID from another RNC | UE ID, Service IDs, Service request | UE ID. Service ID. RB information for corresponding service |
| | Service impossible | | Impossibility notification |
| Only one RNC and several Cell IDs are selected based on measurement result from UB | Among cells associated with Cell IDs from another RNC, there is cell where service is in operation or available. | UE ID, Service IDs, Service propriety check request | UE ID, Service ID, available Service IDs. RB information for service associated with cell where service is in operation |
| | Service impossible | | Impossibility notification |
| Several RNCs and only one Cell ID per RNC are selected based on measurement result from UE | Service is in operation or available in cell associated with Cell ID from another RNC | UE ID. Service IDs, Service propriety check request | UE ID, Service ID, available Cell ID or Cell ID in service, RB information for service associated with cell where service is in operation |
| | Service impossible | | Service impossible |
| Several RNCs and several Cell IDs per RNC are selected based on measurement result from UE | Among cells associated with Cell IDs from another RNC, there is cell where service is in operation or available. | UE ID, Service TDs, Service propriety check request | UE ID, Service ID, available Cell IDs, Cell IDs in service, RB information for service associated with cell where service is in operation |
| | Service impossible | | Service impossible |

As illustrated in Table 11, when the SRNC 920 receives responses, i.e., MBMS attach response messages, from a plurality of TRNCs, information included in an RRC connection reject message and operations of the SRNC 920 and the TRNC 930 based thereon become different according to the contents of the MBMS attach response messages. For example, the TRNC 930 rejects the MBMS service request when it lacks RRC resources.

Operations of the SRNC 920 and the TRNC 930 based on the contents of the MBMS attach response messages, and information included in an RRC connection reject message corresponding thereto are illustrated in Table 12 below.

**Table 12**

| Operation of SRNC | Operation of TRNC | Contents of RRC connection reject |
|---|---|---|
| Only one RNC and only one Cell ID are selected based on measurement result from UE | Service is in operation or available in cell associated with Cell ID from another RNC | UE ID, Service IDs, Cell ID of cell where the service is in operation. |
| | Service impossible | Service impossible |
| Only one RNC and several Cell IDs are selected based on measurement result from UE | Among cells associated with Cell IDs from another RNC, there is cell where service is in operation or available. | UE ID, Service IDs, Cell IDs of cells where service is in operation, RB information for the service, other Cell IDs of cells where the service is available. |
| | Service impossible | Service impossible |
| Several RNCs and only one Cell ID per RNC are selected based on measurement result from UE | Service is in operation or available in cell associated with Cell ID from another RNC | UE ID. Service Ibs, Cell IDs of cells where the service is in operation, RB information for the service, other Cell IDs of cells where the service potentially available. |
| | Service impossible | Service impossible |
| Several RNCs and several Celt IDs per RNC are selected based on measurement result from UE | Among cells associated with Cell IDs from anther RNC, there is cell where service is in operation or available. | UE ID, Service IDs, Cell IDs of cells where the service is in operation, RB information for the service, other Cell IDs of cells where the service is potentially available. |
| | Service impossible | Service impossible |

As illustrated in Table 12, the SRNC 920 appropriately selects Cell IDs included in the MBMS attach response messages received from the TRNCs, and transmits the selected Cell IDs to the UE 910 through an RRC connection reject message (Step 953). A criterion based on which the SRNC 920 selects a Cell ID to be transmitted to the UE 910 can be the measurement result of neighbor cells, transmitted by the UE 910, and information on whether the MBMS service requested by the UE 910 can be optimally served. The information on whether the MBMS service requested by the UE 910 can be optimally served is needed when an RNC of a corresponding cell is not required to receive MBMS data from the SGSN 940. The cell capable of optimally serving the MBMS service requested by the UE 910 refers to a cell that already serves the MBMS service requested by the UE 910.

Upon receiving the RRC connection reject message, the UE 910 selects the best cell among the Cell IDs included in the received RRC connection reject message and receives MBMS data from the corresponding cell (Step 955). The reason for performing an authentication operation in step 949 is to receive MBMS data from the SGSN 940 when the TRNC 930 receiving the MBMS attach request message does not support the requested MBMS service.

Next, with reference to Table 13, a format of the RRC connection request message will be described.

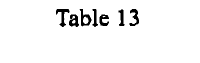

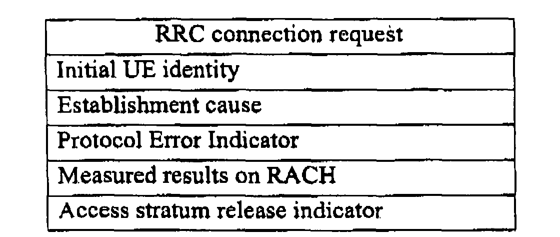

In Table 13, Initial UE identity represents an ID of a UE transmitting the RRC connection request message, and Establishment cause represents a cause that the UE transmits the RRC connection request message. As described above, the present invention proposes a new cause value indicating that a UE desires an MBMS service. In addition, Protocol Error Indicator indicates whether there is a protocol error, and 'Measured results on RACH' represents the results obtained by measuring by the UE its neighbor cells based on system information acquired from a BCH signal received from a cell where the UE is currently located. The present invention proposes that a UE determines by itself a time when the UE reports the measurement values for the neighbor cells, or an SRNC instructs the UE through BCH. Though this will be described later, only a particular Cell ID rather than the measurement results can be transmitted according to operation of the UE. Further, Access stratum release Indicator represents an AS release indicator.

Next, with reference to Table 14, a format of the RRC connection reject message will be described.

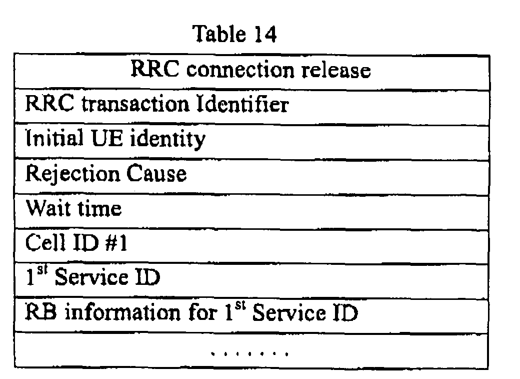

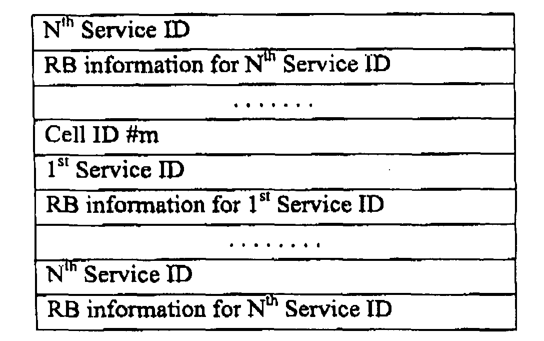

In Table 14, RRC transaction identifier represents an RRC connection ID of the UE, Initial U E identity represents an ID of a UE transmitting the RRC connection reject message, and Rejection cause represents a cause for transmitting the RRC connection reject message. In addition, Wait time represents a wait time for retransmitting the RRC connection request message in answer to the RRC connection reject message, and Cell ID #1 represents an ID of a cell where an MBMS service requested by the UE is available. The number of IDs of the cells where an MBMS service requested by the UE is available can range from 0 to m (where m is a positive integer). 1st Service ID is an ID of a first MBMS service being served in a cell having the Cell ID #1, and for example, TMGI can be used as 1st Service ID. The "first MBMS service" refers to an MBMS service that the UE is receiving or an MBMS service for which the UE subscribed. 'RB information for 1st Service ID' represents RB information for an MBMS service corresponding to the 1st Service ID, Nth Service ID is an ID of an nth MBMS being served in a cell having the Cell ID #1, and 'RB information for Nth Service ID' represents RB information of an MBMS service corresponding to an Nth Service ID. In this manner, MBMS Service IDs for the other cells and corresponding RB information are included.

Although the present invention requests a continuous MBMS service using the existing RRC connection request message as the UE moves to another cell in an NTA, it is also possible to request a continuous MBMS service by proposing a new message. Herein, a newly proposed message for providing a continuous MBMS service will be defined as "Continuous MBMS service request message," and a format of the Continuous MBMS service request message is illustrated in Table 15 below.

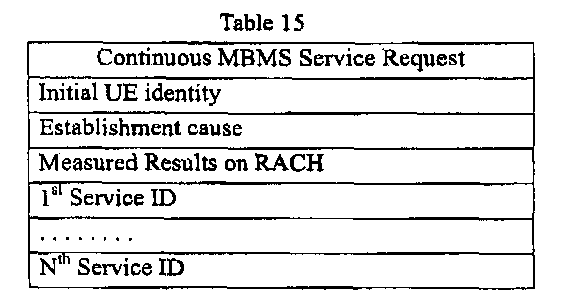

In Table 15, Initial UE identity represents an ID of a UE transmitting the Continuous MBMS service request message, and Establishment cause represents a cause that the UE transmits the Continuous MBMS service request message. Although information indicating that the UE desires a continuous MBMS service is included in the Establishment cause in the embodiment of the present invention, new values can be added thereto afterwards. 'Measured results on RACH' represents the results obtained by measuring by the UE its neighbor cells based on system information acquired from a BCH signal received from a cell where the UE is currently located, and can represent only Cell IDs without the measured results. The case where the measured results are not used will be described later. 1st Service ID to Nth Service ID represent types of all MBMS services for which the UE subscribed.

A format of a Continuous MBMS service response message, which is a response message for the Continuous MBMS service request message, is illustrated in Table 16 below.

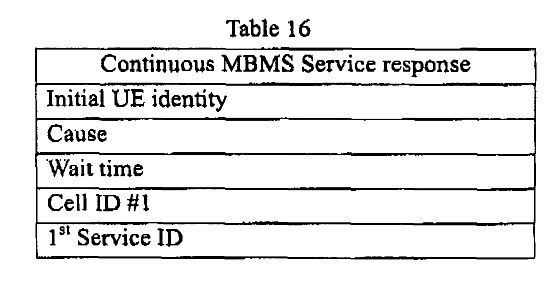

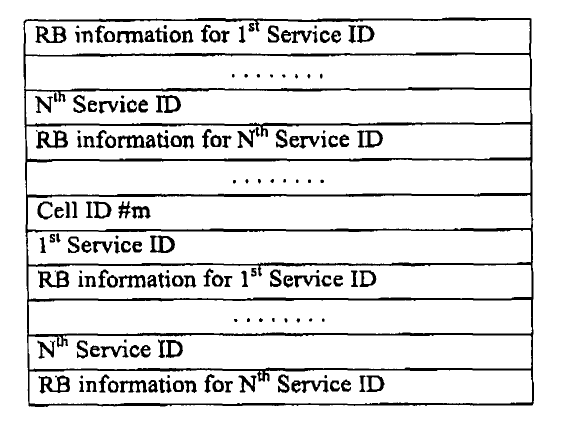

Before a description of Table 16 is given, it should be noted that, as described above, it is also possible to respond to a continuous MBMS service request of the UE by adding new IEs to an RRC connection reject message and it is also possible to include a response to a continuous MBMS service request of the UE in the Continuous MBMS service response message. In Table 16, Initial UE identity represents an ID of a UE transmitting the Continuous MBMS service response message, and Cause represents a cause that the UE transmits the Continuous MBMS service response message. In the second embodiment of the present invention, a Cause value representing a cause for transmitting the Continuous MBMS service response message is defined in the three values, which are described in conjunction with Table 10. Wait time is a value that can be optionally used, and when an 'MBMS Service request not supported' value is marked in the Cause value, the MBMS Service request message is transmitted again after the Wait time. The other fields in Table 16 are identical to those descried illustrated in Table 14, so a detailed description thereof will be omitted herein for simplicity.

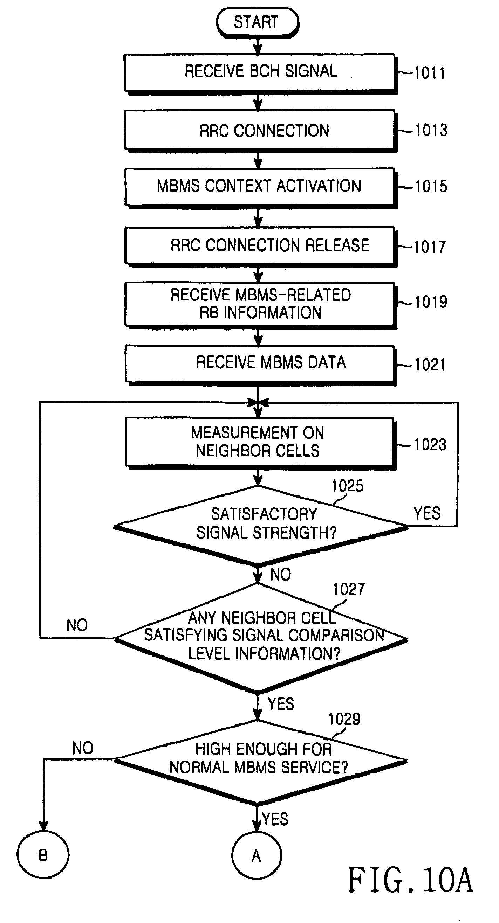

FIGS. 10A to 10C are flowcharts illustrating an operation of a UE according to the second embodiment of the present invention. Referring to FIG. 10A, in step 1011, a UE receives a BCH signal from an SRNC, and acquires from the BCH signal i) system information of a cell where the UE is currently located, ii) MBMS-related measurement information, iii) information on whether the cell provides an MBMS service while operating as a TA or the cell provides an MBMS service while operating as an NTA, and iv) channel information of NCCH or MCCH capable of transmitting MBMS-related control information,. The MBMS-related measurement information, for example, means that the RRC connection request message or the Continuous MBMS service request message should be transmitted when a level of a radio signal from a cell where the UE is located and levels of radio signals from neighbor cells of the cell are larger than or equal to a predetermined value or smaller than the predetermined value. Regarding measurement of the MBMS-related neighbor cells, the system can adjust a time at which the UE transmits a message requesting a continuous MBMS service, using a reference value of a radio signal difference transmitted over the BCH. If the radio signal difference, i.e., a difference between a level of a radio signal from a cell from which the current MBMS service is received and a level of a radio signal from a neighbor cell, is set to a positive value, the UE can transmit a message related to a continuous MBMS service request in a situation where the current MBMS service is received satisfactorily, so the UE can request continuity of the MBMS service. If a difference in a level of the ratio signal is set to a negative value, measurement results of the UE can become more accurate. That is, measurement information for a cell to which the UE will most probably move can be transmitted to an RNC that manages a cell from which the UE receives an MBMS service. In addition, the difference in a level of the radio signal can be experimentally determined in the UE instead of being transmitted over BCH. Also, the difference can be separately received even when an MBMS service is requested.

In step 1013, the UE performs an RRC connection operation together with an SRNC that manages a cell transmitting the BCH signal, using information acquired from the received BCH signal. In the RRC connection operation, the UE transmits an RRC connection request message to the SRNC, receives an RRC connection setup message from the SRNC in response to the RRC connection request message, and then transmits again an RRC connection setup complete message to the SRNC. In step 1015, the UE performs an MBMS context activation operation along with a GGSN using the RRC connection. In the MBMS context activation operation, the UE transmits an Activate MBMS context request message to an SGSN, and receives an Activate MBMS context response message from the SGSN in response to the Activate MBMS context request message. The Activate MBMS context request message indicates that the UE desires an MBMS service, and the Activate MBMS context response message is a response to the Activate MBMS context request, and is divided into a positive response and a negative response. The positive response indicates that the UE can receive the MBMS service, while the negative response indicates that the UE cannot receive the MBMS service. Though not illustrated in FIG. 10A, when there is a previous notification for MBMS services, the UE can select a particular MBMS service from an MBMS service notification list, and send an activation request to the GGSN.

In step 1017, the UE performs an RRC connection release operation, in which the UE receives an RRC connection release message from an SRNC having an RRC connection to the UE, and transmits an RRC connection release confirm message to the SRNC in response to the received RRC connection release message. Because the UE is expected to receive an MBMS service in an NTA, the RRC connection is unnecessary. Therefore, the RRC connection release operation is performed. In step 1019, the UE receives RB information needed for receiving an MBMS service from the SRNC. The RB information needed for receiving an MBMS service can be transmitted over either MCCH or NCCH. Alternatively, the RB information can be transmitted over another downlink common channel the UE can receive.

In step 1021, the UE receives MBMS data from the SRNC. In step 1023, the UE performs a measurement operation on a cell transmitting the current MBMS service and neighbor cells of the cell, based on information acquired from the received BCH signal. In step 1025, the UE determines whether signal strength of a cell providing the current MBMS service is satisfactory as a result of the measurement, i.e., whether it can receive the MBMS service without error. If it is determined that the signal strength of a cell providing the current MBMS service is high enough so that the UE can received the MBMS service without error, the UE returns to step 1023. However, if it is determined that the signal strength of a cell providing the current MBMS service is too low for the UE to receive the MBMS service without error, the UE proceeds to step 1027.

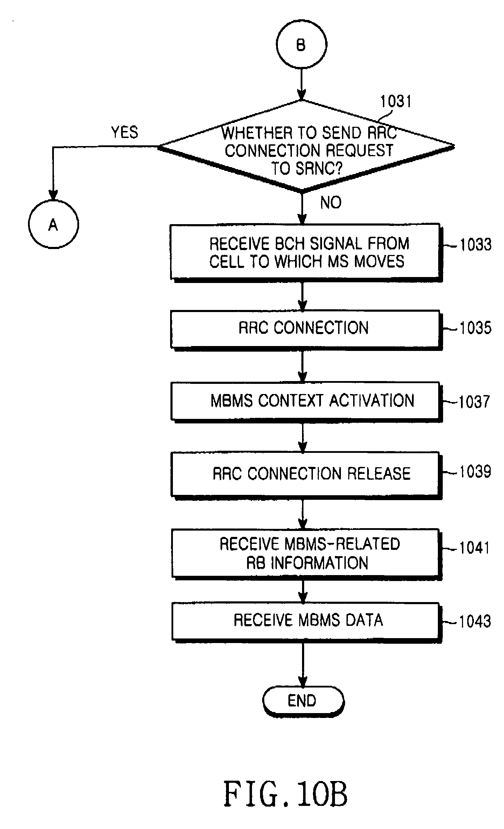

In step 1027, the UE determines whether there is any neighbor cell signal satisfying signal comparison level information acquired from the received BCH. If it is determined that there is no neighbor cell signal satisfying the signal comparison level information, the UE returns to step 1023. However, if it is determined that there is a neighbor cell signal satisfying the signal comparison level information, the UE proceeds to step 1029. In step 1029, the UE determines whether radio signal strength of a cell providing the current MBMS service is high enough to normally receive the MBMS service. If it is determined that the radio signal strength of a cell providing the current MBMS service is too low for the UE to normally receive the MBMS service, the UE proceeds to step 1031 of FIG. 10B. Herein, it has been stated that a transmission time of a message requesting a continuous MBMS service for the UE can be determined according to the signal comparison level information acquired from the BCH. However, in a radio environment, because a level of a radio signal can abruptly change, the UE can perform a different operation on the MBMS service depending on measurement results of a radio signal level of a cell providing the current MBMS service. In this case, the UE can measure either a pilot signal on a common pilot channel (CPICH) or a signal on an MBMS data channel, in determining the transmission time. As described above, the signal comparison level information can be determined in various methods, and the determined signal comparison level information is also transmitted to the UE through a plurality of paths.

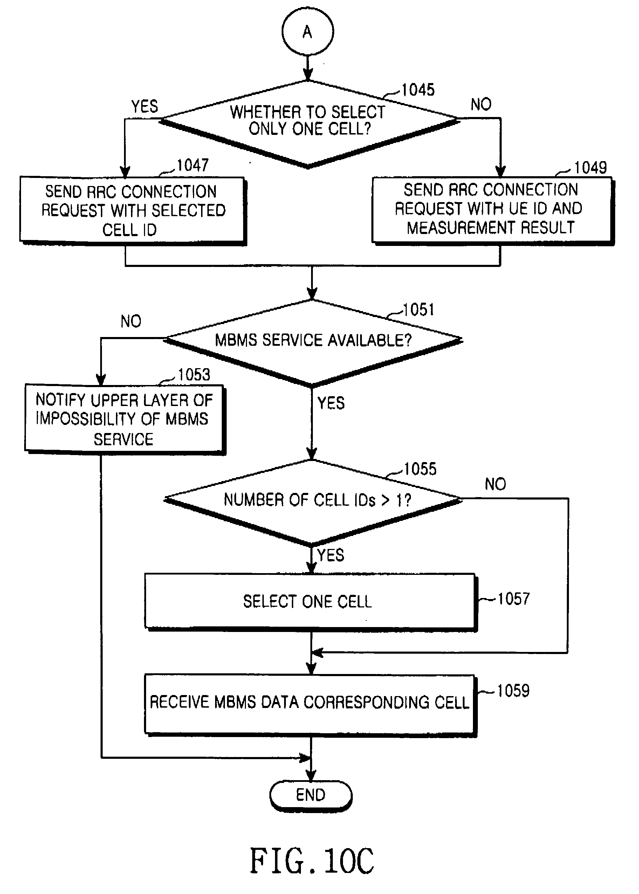

In step 1031, the UE determines whether to transmit an RRC connection request message to an SRNC. If the UE determines to transmit an RRC connection request message to the SRNC, it proceeds to step 1045 of FIG. 10C. However, if the U E determines not to transmit an RRC connection request message to the SRNC, it proceeds to step 1033. In step 1033, the UE receives a BCH signal from a particular cell among its neighbor cells, i.e., a cell to which it is moving, depending on the measurement results, and then proceeds to step 1035. Thereafter, the UE performs operations of steps 1035 to 1043, and then ends the procedure. The steps 1035 to 1043 are the same as steps 1013 to 1021 of FIG. 10A, so a detailed description thereof will be omitted for simplicity.

Operations after the step 1033 are performed when it is determined that it is preferable to select a cell having a good radio environment and repeat an MBMS service reception process from the beginning rather than transmitting a message requesting a continuous MBMS service to an SRNC controlling a cell where the UE is currently located, if the quality of a radio signal from the cell where the UE is currently located is subject to abrupt deterioration. The determination can be made on an application program according to an operational criterion of the UE. Even during the operations after the step 1035, the CTE has information on a cell providing the current MBMS service, so that it can continuously receive the MBMS service. As a result, the UE can minimize an MBMS data reception loss, which may occur in the operations following the step 1035.

If it is determined that the radio signal strength of a cell providing the current MBMS service is high enough for the UE to normally receive the MBMS service in step 1029 or if the UE determines not to transmit an RRC connection request message to the SRNC in step 1031, in step 1045, the UE determines whether to select only one particular cell from its neighbor cells and transmit an RRC connection request message to an SRNC. If the UE determines to select only one cell and transmit an RRC connection request message to an SRNC, it proceeds to step 1047. In step 1047, the UE transmits to the SRNC an RRC connection request message containing the measurement results acquired by the UE or a Cell ID of a cell selected by the UE's cell selection algorithm, and then proceeds to step 1051. Instead of the RRC connection request message, a Continuous MBMS service request message newly proposed in the present invention can also be transmitted. When the UE selects only one cell and transmits the RRC connection request message or the Continuous MBMS service request message to an SRNC, the measurement results acquired by the UE cannot be included in the message.

If, in step 1045, the UE determines not to select only one cell and transmit an RRC connection request message to an SRNC, i.e., if the UE determines to select a plurality of cells and transmit an RRC connection request message to an SRNC, in step 1049, the UE transmits to the SRNC an RRC connection request message containing a UE ID and measurement results, or a Continuous MBMS service request message containing an MBMS Service ID addition to the above information, and then proceeds to step 1051. It will be assumed in FIG. 10C that the UE transmits the RRC connection request message. As the UE transmits the RRC connection request message, the UE receives an RRC connection response message in response to the RRC connection request message from the SRNC.

In step 1051, the UE analyzes information included in the received RRC connection response message, i.e., available MBMS service contents, MBMS Service IDs, RB corresponding to the MBMS Service IDs, and Cell IDs of cells where the MBMS service is available, and determines whether the requested MBMS service that the UE desires to continuously receive is available. If it is determined that the MBMS service requested by the UE is unavailable, the UE proceeds to step 1053. In step 1053, the UE notifies an upper layer of impossibility of the MBMS service, and then ends the procedure.

If it is determined in step 1051 that the MBMS service requested by the UE is available, the UE proceeds to step 1055. In step 1055, the UE determines whether the number of Cell IDs included in the RRC connection reject message exceeds 1. If it is determined that the number of Cell IDs included in the RRC connection reject message exceeds 1, the UE proceeds to step 1057. In step 1057, the UE selects one cell considering a variation in the radio environment and the present condition of the MBMS service being served in each cell (all MBMS services requested by UE cannot be served in a particular cell), and then proceeds to step 1059. If it is determined in step 1055 that the number of Cell IDs included in the RRC connection reject message does not exceed 1, the UE proceeds directly to step 1059.

In step 1059, the UE receives MBMS data according to the MBMS Service IDs of a cell corresponding to the Cell ID and the RB information for the MBMS services, and then ends the procedure. In step 1057, when the UE selects a cell from which only the Cell ID is transmitted, the UE receives a BCH signal from the cell, and then performs the operations following step 1035, so as to first receive MBMS data from the selected cell. In addition, because the UE can previously know that the MBMS service is available in the cell, it is possible to reduce uncertainty of the requested MBMS service.

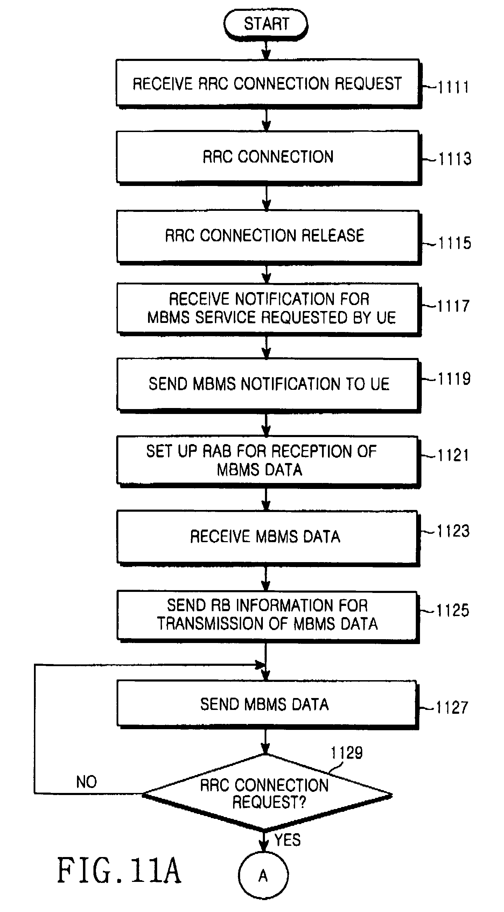

FIGS. 11A to 11C are flowcharts illustrating an operation of an SRNC according to the second embodiment of the present invention. Referring to FIG. 11A, the SRNC receives an RRC connection request message from a particular UE in step 1111, and in step 1113, the SRNC receiving the RRC connection request message performs an RRC connection operation together with the UE. In step 1115, the SRNC performs an RRC connection release operation of releasing the currently set-up RRC connection. In step 1117, the SRNC receives a Notification message for the MBMS service requested by the UE. In step 1119, the SRNC transmits the Notification information to the UE over a downlink common channel depending on information included in the received Notification message. Here, PICH or PCH can be used as the downlink common channel.

In step 1121, the SRNC performs an RAB setup operation with an SGSN in order to receive MBMS data, and in step 1123, the SRNC receives MBMS data from the SGSN. In step 1125, the SRNC transmits RB information for transmission of the MBMS data to the UE over NCCH or MCCH. In step 1127, the SRNC transmits the MBMS data received from the SGSN to the UE. In step 1129, the SRNC checks whether an RRC connection request message is received from the UE. As described above, a Continuous MBMS service request message can be used instead of the RRC connection request message.

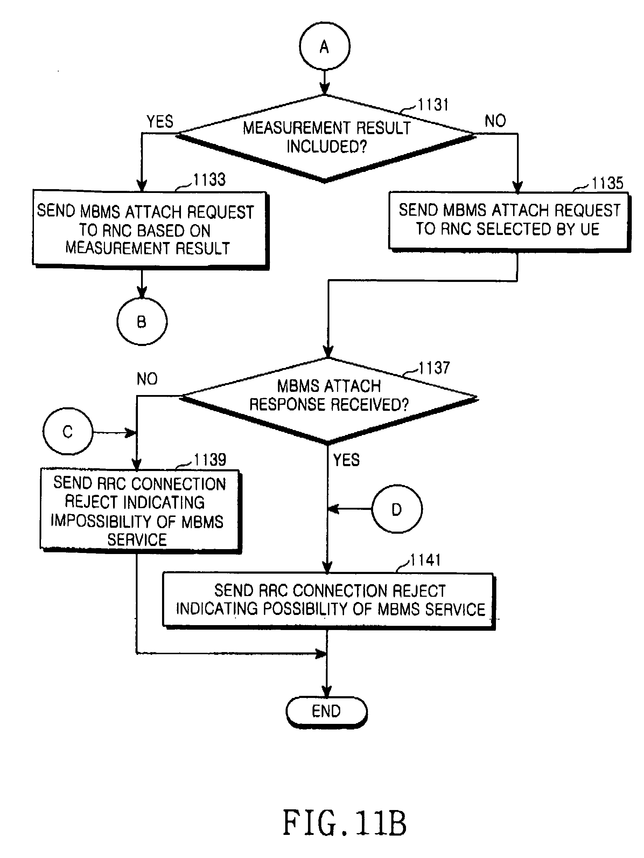

If it is determined in step 1129 that an RRC connection request message is not received from the UE, the SRNC returns to step 1127. However, if it is determined that an RRC connection request message is received from the UE, the SRNC proceeds to step 1131 of FIG. 11B.

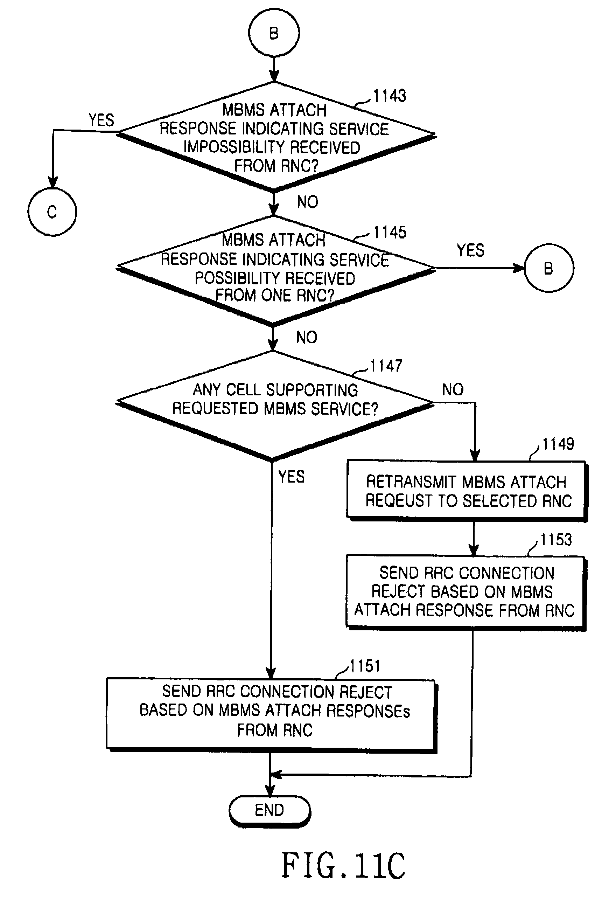

In step 1131, the SRNC determines whether the measurement results by the UE are included in the RRC connection request message received from the UE. If it is determined that the measurement results by the UE are included in the received RRC connection request message, the SRNC proceeds to step 1133. In step 1133, the SRNC analyzes the measurement results included in the received RRC connection request message, transmits an MBMS attach request message containing a UE ID, an MBMS Service ID of the MBMS service the UE was receiving, and a unique number of an MBMS Service ID of an MBMS service for which the UE subscribed, to SRNCs managing the cells corresponding to the measurement results, and then proceeds to step 1143 of FIG. 11C.

If it is determined in step 1131 that the measurement results by the UE are not included in the received RRC connection request message, the SRNC proceeds to step 1135. In step 1135, the SRNC transmits the MBMS attach request message containing a UE ID included in the received RRC connection request message, an MBMS Service ID of the MBMS service the UE was receiving, and a unique number of an MBMS Service ID of an MBMS service for which the UE subscribed, to an SRNC of the cell selected by the UE, and then proceeds to step 1137.

In step 1137, the SRNC determines whether an MBMS attach response message having a positive response indicating possibility of the requested MBMS service is received from an SRNC that transmitted the MBMS attach request message. If it is determined that the MBMS attach response message having a positive response indicating possibility of the requested MBMS service is not received from an SRNC that transmitted the MBMS attach request message, the SRNC proceeds to step 1139. In step 1139, the SRNC transmits to the UE an RRC connection reject message indicating impossibility of the MBMS service requested by the UE, and then ends the procedure.

However, if it is determined in step 1137 that the MBMS attach response message having a positive response indicating possibility of the requested MBMS service is received from an SRNC that transmitted the MBMS attach request message, the SRNC proceeds to step 1141. In step 1141, the SRNC transmits to the UE an RRC connection reject message indicating possibility of the MBMS service requested by the UE, depending on information included in the MBMS attach response message, and then ends the procedure.

Operations after step 1143 are performed when the SRNC has inquired from a plurality of cells about whether the MBMS service requested by the UE is available. In step 1143, the SRNC determines whether an MBMS attach response message indicating impossibility of the MBMS service requested by the UE is received from a plurality of cells, i.e., a plurality of RNCs. If it is determined that an MBMS attach response message indicating impossibility of the requested MBMS service is received from a plurality of RNCs, the SRNC returns to step 1139. However, if it is determined that an MBMS attach response message indicating impossibility of the requested MBMS service is not received from a plurality of RNCs, i.e., if an MBMS attach response message indicating possibility of the requested MBMS service is received from any one of the plurality of RNCs, the SRNC proceeds to step 1145.

In step 1145, the SRNC determines whether an MBMS attach response message having a positive response is received from only one RNC. If it is determined that an MBMS attach response message having a positive response is received from only one RNC, the SRNC returns to step 1143. However, if it is determined that an MBMS attach response message having a positive response is not received from only one RNC, i.e., if an MBMS attach response message having a positive response is received from two or more RNCs, the SRNC proceeds to step 1147.

In step 1147, the SRNC determines whether there is any cell supporting the MBMS service currently requested by the UE among cells, or RNCs, that transmitted MBMS attach response messages indicating possibility of the MBMS service. If it is determined that there is no cell supporting the MBMS service currently requested by the UE, the SRNC proceeds to step 1149. In step 1149, the SRNC selects one cell based on the measurement results by the UE and information on how many MBMS services requested by the UE are available in each cell, retransmits the MBMS attach request message to an RNC managing the selected cell, and then proceeds to step 1151. Here, the MBMS attach request message is a message for requesting the SRNC to prepare to receive the MBMS data requested by the UE. In step 1149, the SRNC cannot transmit the MBMS attach request message to each RNC managing a plurality of cells for the following reasons. That is, if several cells prepare for, or start transmission of MBMS data while it is uncertain to which cell the UE will move, a considerable waste of radio resources is expected. In step 1151, the SRNC transmits an RRC connection reject message to the UE depending on information included in the MBMS attach response message received in response to the MBMS attach request message, and then ends the procedure.

However, if it is determined in step 1147 that there are cells supporting the MBMS service currently requested by the UE, the SRNC proceeds to step 1153. In step 1153, the SRNC transmits an RRC connection reject message to the UE depending on information included in the MBMS attach response messages received from the RNCs, and then ends the procedure.

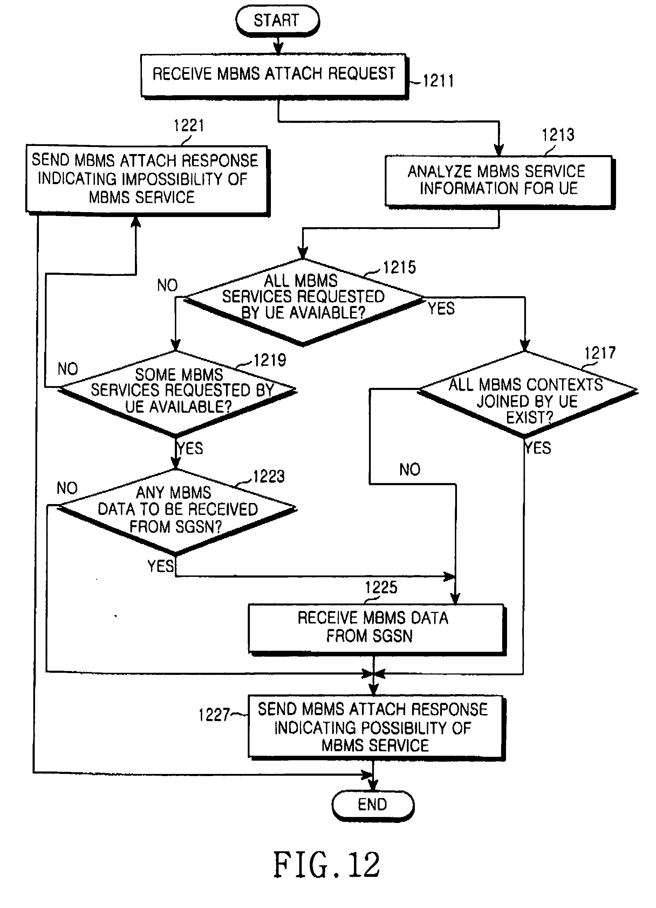

FIG. 12 is a flowchart illustrating an operation of a TRNC according to the second embodiment of the present invention. Before a description of FIG. 12 is given, it will be assumed that a UE is receiving an MBMS service in a cell managed by the TRNC, and the TRNC transmits an MBMS attach response message to an SRNC of the UE, along with RB information for an MBMS service the UE will receive.

Referring to FIG. 12, in step 1211, the TRNC receives from an SRNC an MBMS attach request message containing a UE ID, an MBMS Service ID of an MBMS service the UE was receiving, and a Cell ID of a cell to which the UE is expected to move. In step 1213, the TRNC analyzes MBMS service information for the UE using the information included in the received MBMS attach request message. Here, when an RRC connection request message is used, the MBMS service information can become MBMS services the UE was receiving in the corresponding cell, and when a Continuous MBMS service request message is used, the MBMS service information can become MBMS services the UE was receiving in the corresponding cell and MBMS services for which the UE has subscribed.

In step 1215, the TRNC determines whether all MBMS services requested by the UE are available. If it is determined that all MBMS services requested by the UE are available, the TRNC proceeds to step 1217. In step 1217, the TRNC determines whether all MBMS service contexts joined by the UE exist. If it is determined that not all of the joined MBMS service contexts exist, or if only some of the joined MBMS service contexts exist, the TRNC proceeds to step 1225. However, if it is determined that all the MBMS service contexts joined by the UE exist, the TRNC proceeds to step 1227.

However, if it is determined in step 1215 that not all of the MBMS services requested by the UE are available, the TRNC proceeds to step 1219. In step 1219, the TRNC determines whether even some of the MBMS services requested by the UE are available. If it is determined that none of the MBMS services requested by the UE are available, the TRNC proceeds to step 1221. In step 1221, the TRNC transmits to the SRNC an MBMS attach response message containing information indicating that it cannot provide the MBMS service to the UE, and then ends the procedure.

If it is determined in step 1219 that some of the MBMS services requested by the UE are available, the TRNC proceeds to step 1223. In step 1223, the TRNC determines whether there is any MBMS data that must be received from the SGSN. If it is determined that there is any MBMS data that must be received from the SGSN, the TRNC proceeds to step 1225. In step 1225, the TRNC sends an MBMS data transmission request to the SGSN, receives MBMS data in response to the MBMS data transmission request, and then proceeds to step 1227. In step 1227, the TRNC transmits to the SRNC an MBMS attach response message containing information indicating that it can transmit the MBMS service to the UE, and a Cell ID of a cell that can provide the MBMS service, and then ends the procedure.

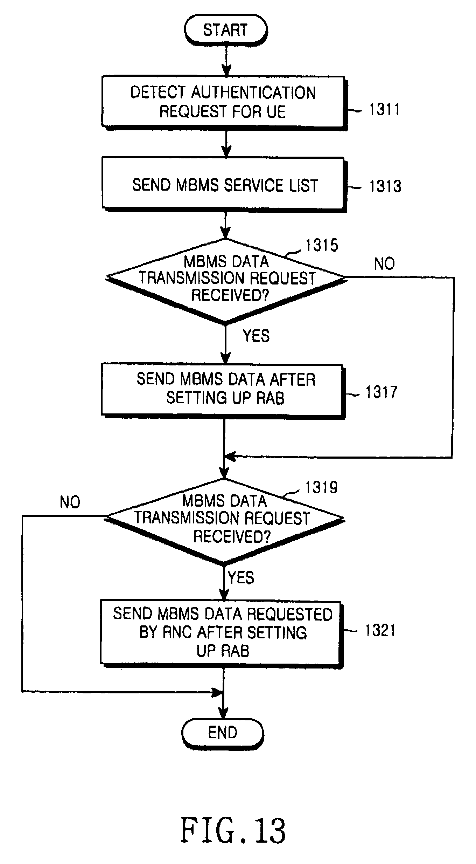

FIG. 13 is a flowchart illustrating an operation of an SGSN according to a second embodiment of the present invention. Referring to FIG. 13, the SGSN detects an authentication request for a particular UE from a particular RNC, i.e., a TRNC, in step 1311, and in step 1313, the SGSN performs a UE authentication operation on the authentication-requested UE, transmits an MBMS service list associated with the UE to the TRNC. In step 1315, the SGSN determines whether an MBMS data transmission request included in the MBMS service list is received from the TRNC. If it is determined that the MBMS data transmission request included in the MBMS service list is received from the TRNC, the SGSN proceeds to step 1317. In step 1317, the SGSN sets up an RAB necessary for transmitting the requested MBMS service data, transmits the MBMS data over the set-up RAB, and then proceeds to step 1319.

If it is determined in step 1315 that the MBMS data transmission request included in the MBMS service list is not received from the TRNC, the SGSN proceeds to step 1319. In step 1319, the SGSN determines whether an MBMS data transmission request is received from the TRNC. If it is determined that the MBMS data transmission request is not received from the TRNC, the SGSN ends the procedure. However, if it is determined that the MBMS data transmission request is received from the TRNC, the SGSN proceeds to step 1321. In step 1321, the SGSN sets up an RAB necessary for transmitting the transmission-requested MBMS data, transmits the MBMS data over the set-up RAB, and then ends the procedure.

As can be appreciated from the foregoing description, the present invention can provide an MBMS service to a UE located in an NTA without a separate RRC connection in a mobile communication system. Because the MBMS service is provided without a separate RRC connection, a waste of radio resources is prevented contributing to an increase in the entire radio resource efficiency of a mobile communication system.

While the present invention has been shown and described with reference to a certain preferred embodiment thereof, it will be understood by those skilled in the art that various changes in form and details may be made therein without departing from the spirit and scope of the invention as defined by the appended claims.

## Claims

1. A method for providing a packet service when a user equipment (UE) moves to a second cell while receiving the packet service in a first cell in a mobile communication system including a serving radio network controller (SRNC) for managing the first cell serving as a non-tracking area (NTA), a target radio network controller (TRNC) for managing the second cell, and a serving GPRS (General Packet Radio Service) support node (SGSN) for providing packet service data, the method comprising the steps of:
(a) upon detecting movement from the first cell to the second cell, sending, by the UE, a notification indicating the cell movement to the TRNC;
(b) sending, by the TRNC, an authentication request for the UE to the SGSN in response to the cell movement notification;
(c) in response to the authentication request, transmitting, by the SGSN to the TRNC, information on whether the UE is qualified to receive the packet service, and packet service information for the packet service the UE is currently receiving in the first cell, if the UE is qualified to receive the packet service; and
(d) if the UE is qualified to receive the packet service, transmitting, by the TRNC to the UE, information on whether the packet service corresponding to the packet service information is available, and radio resource information necessary for providing the packet service when the packet service is available.

2. The method of claim 1, wherein the authentication request for the UE sent to the SGSN includes a UE ID (Identification) of the UE.

3. The method of claim 1, wherein the packet service information includes service IDs (Identifications) indicating types of packet services that the UE is currently receiving in the first cell.

4. The method of claim 3, further comprising the step of sending, by the TRNC to the SGSN, a packet data request for packet service types currently unavailable by the TRNC, if there are currently unavailable packet service types among packet services types corresponding to service IDs in the packet service information.

5. The method of claim 1, further comprising the step of transmitting, by the TRNC, a notification indicating availability of the packet service, and service IDs (Identifications) corresponding to packet service types available by the TRNC.

6. The method of claim 1, further comprising the step of transmitting, by the TRNC, a notification indicating an unavailability of the packet service to the UE, if the UE is not qualified to receive the packet service.

7. The method of claim 3, further comprising the step of transmitting, by the RNC, a notification indicating an unavailability of the packet service to the UE, if packet service types corresponding to all service IDs (Identifications) in the packet service information are unavailable by the TRNC.

8. A method for providing a packet service when a user equipment (UE) moves to a second cell while receiving the packet service in a first cell in a mobile communication system including a serving radio network controller (SRNC) for managing the first cell serving as a non-tracking area (NTA), a target radio network controller (TRNC) for managing the second cell, and a serving GPRS (General Packet Radio Service) support node (SGSN) for providing packet service data, the method comprising the steps of:
(a) upon detecting movement from the first cell to the second cell, sending a notification indicating the cell movement to the TRNC;
(b) in response to the cell movement notification, receiving, transmitting from the TRNC, information indicating whether a packet service the UE is currently receiving in the first cell is available in the second cell, and packet service information necessary for receiving the packet service in the second cell, if the packet service the UE is currently receiving in the first cell is available in the second cell; and
(c) receiving the packet service in the second cell according to the packet service information.

9. The method of claim 8, wherein the cell movement notification includes information indicating that the UE desires to continuously receive the packet service the UE is currently receiving in the first cell, in the second cell.

10. The method of claim 8, wherein the packet service information includes service IDs (Identifications) indicating types of the packet services and radio resource information necessary for providing the packet services corresponding to the service IDs.

11. The method of claim 8, further comprising the step of recognizing that the packet service currently available in the first cell is unavailable in the second cell, when information indicating that the packet service currently available for the UE in the first cell is unavailable in the second cell is received from the TRNC in response to the cell movement notification.

12. A method for providing a packet service to a user equipment (UE) by a target radio network controller (TRNC) when the UE receiving the packet service in a first cell moves to a second cell in a mobile communication system including a serving radio network controller (SRNC) for managing the first cell serving as a non-tracking area (NTA), the TRNC for managing the second cell, and a serving GPRS (General Packet Radio Service) support node (SGSN) for providing packet service data, the method comprising the steps of:
(a) sending an authentication request for the UE to the SGSN upon receiving a notification indicating that the UE receiving the packet service in the first cell moves to the second cell;
(b) in response to the authentication request, receiving, from the SGSN, information on whether the UE is qualified to receive the packet service, and packet service information for the packet service the UE is currently receiving in the first cell, if the UE is qualified to receive the packet service; and
(c) if the UE is qualified to receive the packet service, transmitting, to the UE, information on whether the packet service corresponding to the packet service information is available, and radio resource information necessary for providing the packet service, if the packet service is available.

13. The method of claim 12, wherein the authentication request for the UE sent to the SGSN includes a UE ID (Identification) of the UE.

14. The method of claim 12, wherein the packet service information includes service IDs (Identifications) indicating types of packet services the UE is currently receiving in the first cell.

15. The method of claim 14, further comprising the step of sending to the SGSN a packet data request for currently unavailable packet service types, if there are currently unavailable packet service types among packet service types corresponding to the service IDs in the packet service information.

16. The method of claim 12, wherein the step (c) comprises the step of transmitting a notification indicating availability of the packet service, and service IDs (Identifications) of the available packet service types.

17. The method of claim 12, further comprising the step of sending a notification indicating an unavailability of the packet service to the UE, if the UE is not qualified to receive the packet service.

18. The method of claim 14, further comprising the step of sending a notification indicating an unavailability of the packet service to the UE, if the packet services corresponding to all service IDs in the packet service information are unavailable.

19. A system for providing a packet service when a user equipment (UE) moves to a second cell while receiving packet service data in a first cell in a mobile communication system comprising:
a serving radio network controller (SRNC) for managing the first cell serving as a non-tracking area (NTA);
a target radio network controller (TRNC) for managing the second cell; and
a serving GPRS (General Packet Radio Service) support node (SGSN) for providing the packet service data;
wherein the UE transmits a notification indicating cell movement to the TRNC upon detecting movement from the first cell to the second cell, and in response to the cell movement notification, receives, from the TRNC, information on whether a packet service currently available in the first cell is available in the second cell, and radio resource information necessary for receiving the packet service in the second cell, if the packet service currently available in the first cell is available in the second cell, and receives the packet service from the second cell according to the radio resource information;
the TRNC transmits an authentication request for the UE to the SGSN in response to the cell movement notification, and in response to the authentication request, receives, from the SGSN, information on whether the UE is qualified to receive the packet service, and packet service information for a packet service that the UE is currently receiving in the first cell, if the UE is qualified to receive the packet service, and transmits, to the UE, information on whether the packet service is available, if the UE is qualified to receive the packet service, and radio resource information necessary for providing the packet service, if the packet service is available; and
the SGSN transmits, in response to the authentication request for the UE, to the TRNC, information on whether the UE is qualified to receive the packet service, and packet service information for the packet service that the UE is currently receiving in the first cell if the UE has qualification for receiving the packet service.

20. The system of claim 19, wherein the TRNC transmits the authentication request for the UE including a UE ID (Identification) of the UE.

21. The system of claim 19, wherein the packet service information includes service IDs (Identifications) corresponding to types of packet services the UE is currently receiving in the first cell.

22. The system of claim 21, wherein the TRNC sends to the SGSN a packet data request for currently unavailable packet service types, if there are currently unavailable packet service types among the packet service types corresponding to service IDs in the packet service information.

23. The system of claim 19, wherein the TRNC sends a notification indicating an availability of the packet service, along with service IDs (Identifications) of the available packer service types.

24. The system of claim 19, wherein the TRNC sends to the UE a notification indicating an unavailability of the packet service, if the UE is not qualified to receive the packet service.

25. The system of claim 21, wherein the TRNC sends to the UE a notification indicating an unavailability of the packet service, if the packet services corresponding to all service IDs in the packet service information are unavailable.

26. A method for providing a packet service when a user equipment (UE) moves to a second cell while receiving the packet service in a first cell in a mobile communication system including a serving radio network controller (SRNC) for managing the first cell serving as a non-tracking area (NTA), a target radio network controller (TRNC) for managing neighbor cells of the first cell, a serving GPRS (General Packet Radio Service) support node (SGSN) for providing packet service data, the method comprising the steps of:
(a) upon detecting movement from the first cell to a particular cell among the neighbor cells, sending by the UE a cell movement notification to the SRNC;
(b) in response to the cell movement notification, determining by the SRNC whether a packet service the UE is currently receiving in the first cell is available in the neighbor cells, and transmitting a determination result to the TRNCs managing the neighbor cells;
(c) transmitting, by each of the TRNCs to the UE via the SRNC, information on whether the packet service is available, and radio resource information necessary for providing the packet service in the particular cell, if the packet service is available for the UE; and
(d) selecting by the UE, a second cell capable of optimally serving the packet service based on the radio resource information received from the TRNC, and receiving the packet service from the second cell.

27. The method of claim 26, wherein the cell movement notification includes measurement values of a reception signal received from the first cell and the neighbor cells.

28. The method of claim 27, wherein the step (b) comprises the step of determining whether the packet service is available, and transmitting the determination result to the TRNCs managing neighbor cells having measurement values exceeding a predetermined value among the measurement values of signals received from the neighbor cells.

29. The method of claim 28, further comprising the step of transmitting the determination result, along with a UE ID (Identification) indicating the UE and a service ID corresponding to a type of the packet service.

30. The method of claim 26, wherein the step of selecting the second cell by the UE comprises the step of selecting, as the second cell, a cell that is currently providing the packet service, based on the radio resource information received from each of the TRNCs.
